# EUROPÄISCHE PATENTSCHRIFT

(11) **EP 4 263 101 B1**
(45) Veröffentlichungstag und Bekanntmachung des Hinweises auf die Patenterteilung: **06.11.2024**
(21) Anmeldenummer: 21839337.9
(22) Anmeldetag: 07.12.2021
(51) Int. Cl.: B23F 23/12, B23B 31/40

(54) **WERKZEUGKOPF UND VERFAHREN ZUM BETRIEB EINES WERKZEUGKOPFES, SOWIE WERKZEUGMASCHINE MIT EINEM DERARTIGEN WERKZEUGKOPF**
TOOL HEAD AND METHOD FOR OPERATING A TOOL HEAD, AND MACHINE TOOL COMPRISING SUCH A TOOL HEAD
TÊTE D'OUTIL ET PROCÉDÉ DE FONCTIONNEMENT D'UNE TÊTE D'OUTIL, ET MACHINE-OUTIL COMPRENANT UNE TELLE TÊTE D'OUTIL

(30) Priorität: 18.12.2020 CH 16262020
(43) Veröffentlichungstag der Anmeldung: 25.10.2023
(73) Patentinhaber: Reishauer AG, 8304 Wallisellen (CH)
(72) Erfinder: HALTER, Adrian Marcel, 8304 Wallisellen (CH); HUG, Theophil, 8360 Wallenwil (CH); MÜLLER, Michel, 8610 Uster (CH)
(74) Vertreter: Detken, Andreas
(86) Internationale Anmeldenummer: PCT/EP2021/084604
(87) Internationale Veröffentlichungsnummer: WO 2022/128634

(56) Entgegenhaltungen:
- EP-A1- 0 516 596
- EP-A1- 3 153 277
- EP-A1- 3 636 374
- EP-A2- 1 803 518
- WO-A1-2013/167763
- CN-A- 106 238 832
- DE-U1- 202007 002 379
- JP-A- S59 129 618
- US-A- 3 249 015
- US-A- 4 536 110
- US-A1- 2011 027 031
- US-A1- 2017 232 564

## Beschreibung

### TECHNISCHES GEBIET

Die vorliegende Erfindung betrifft Werkzeugköpfe gemäss den Oberbegriffen der Ansprüche 1 und 5, die aus dem Dokument EP 1 803 518 A2 bekannt sind. Die vorliegende Erfindung betrifft ausserdem eine Werkzeugmaschine mit einem solchen Werkzeugkopf und ein Verfahren zum Betrieb eines solchen Werkzeugkopfes.

### STAND DER TECHNIK

In der Verzahnungsfertigung kommen zunehmend Werkzeuge mit kleinem Durchmesser zum Einsatz. Um die gewünschte Schnittgeschwindigkeit zu erreichen, werden solche Werkzeuge meist bei relativ hohen Drehzahlen betrieben. Solche Werkzeuge können im Verhältnis zu ihrem Durchmesser relativ lang sein. Dadurch sind die Werkzeuge besonders anfällig für Biege- und Torsionsschwingungen. Es ist daher von Vorteil, solche Werkzeuge an beiden Enden auf Spindeln aufzunehmen. Aus dem Stand der Technik sind Werkzeugköpfe für Verzahnmaschinen mit zwei Spindeln, zwischen denen ein Werkzeug aufgenommen ist, seit langem bekannt.

So offenbart DE4431374A1 einen Werkzeugkopf für eine Profilschleifmaschine. Auf zwei separaten Werkzeugschlitten befindet sich jeweils eine Werkzeugspindel mit einem Antriebsmotor. Jeder Werkzeugschlitten ist in axialer Richtung durch einen separaten Verstellantrieb bewegbar. Die Spindelwellen der beiden Werkzeugspindeln sind koaxial zueinander angeordnet und torsions- und biegesteif durch eine Werkzeugaufnahme miteinander verbunden. Dazu weisen die Spindelwellen Aufnahmezapfen auf, die über eine radiale Dehnspannverbindung mit der Werkzeugaufnahme verbunden sind. Die Verstellantriebe der beiden Werkzeugschlitten sind koordiniert bewegbar. Eine solche Konstruktion kann anfällig für Schwingungen sein. Ausserdem besteht die Gefahr von Lagerschäden in den Werkzeugspindeln, wenn sich das Werkzeug während der Bearbeitung thermisch ausdehnt oder wenn die beiden Werkzeugschlitten bei Bewegungen entlang er axialen Richtung nicht perfekt synchron beschleunigt werden.

Auch DE102009039752A1 offenbart einen Werkzeugkopf mit zwei Werkzeugspindel, zwischen denen ein Werkzeug aufgenommen ist. Die Werkzeugspindeln sind gegenüber einer Basis linear verschiebbar. Sie sind durch eine Bewegungsübertragungseinheit koppelbar, um die beiden Werkzeugspindeln mit einem einzigen Verstellantrieb gemeinsam gegenüber der Basis zu verschieben.

EP3153277A1 offenbart einen Werkzeugkopf mit einer Motorspindel und einer Gegenspindel, zwischen denen ein Werkzeug aufgenommen ist. In den Wellen der Motorspindel und der Gegenspindel sind Wuchteinrichtungen integriert.

EP1803518A2 offenbart einen Werkzeugkopf zur Aufnahme eines zweiseitig zu lagernden Werkzeugs. Das Werkzeug ist zwischen zwei Schlitten gehalten, wobei eine voreingestellte Axialkraft vorliegt.

US4536110A offenbart einen Schneidwerkzeugeinbau für eine Zahnradfräsmaschine mit einer Antriebspindel und einer ausserhalb angeordneten Lagerunterstützung in axialer Fluchtlage mit der Antriebsspindel. Der Schneidwerkzeugeinbau weist eine erste Kupplungseinheit zur lösbaren Verbindung eines Endes eines Fräsers in Antriebseingriff mit der Antriebsspindel sowie eine zweite Kupplungseinheit zur lösbaren Verbindung des anderen Endes des Fräsers mit der außerhalb angeordneten Lagerunterstützung auf.

EP0516596A1 offenbart eine Wälzfräsmaschine mit einem Paar koaxialer Köpfe, die einen zwischen ihnen gehaltenen Wälzfräser antreiben. Die Köpfe sind aufeinander zu bewegbar.

EP3636374A1 offenbart einen Bearbeitungskopf mit einer Werkzeugaufnahme, die einen Gegenhalter aufweist. Der Gegenhalter ist über eine Bewegungsachse aus seiner Arbeitsstellung in eine inaktive Stellung beweglich.

### DARSTELLUNG DER ERFINDUNG

Es ist eine Aufgabe der vorliegenden Erfindung, einen Werkzeugkopf mit zwei Spindeln, zwischen denen ein Werkzeug aufnehmbar ist, anzugeben, wobei der Werkzeugkopf ein verbessertes Schwingungsverhalten aufweist und bei dem die Gefahr von Lagerschäden aufgrund von thermischen Ausdehnungen vermindert ist.

Diese Aufgabe wird durch einen Werkzeugkopf nach Anspruch 1 oder 5 gelöst. Weitere Ausführungsformen sind in den abhängigen Ansprüchen angegeben.

Es wird ein Werkzeugkopf für eine Werkzeugmaschine, insbesondere für eine Verzahnmaschine, angeben, die aufweist:
eine erste Spindeleinheit mit mindestens einem ersten Spindellager und einer ersten Spindelwelle, die in dem ersten Spindellager um eine Werkzeugspindelachse drehbar gelagert ist, wobei das erste Spindellager dazu ausgebildet ist, sowohl Radial- als auch Axialkräfte aufzunehmen; und
eine zweite Spindeleinheit mit einem zweiten Spindellager und einer zweiten Spindelwelle, die in dem zweiten Spindellager um die Werkzeugspindelachse drehbar gelagert ist, wobei das zweite Spindellager dazu ausgebildet ist, sowohl Radial- als auch Axialkräfte aufzunehmen,
wobei die erste Spindeleinheit und die zweite Spindeleinheit derart koaxial zueinander angeordnet sind, dass ein Werkzeug axial zwischen der ersten Spindelwelle und der zweiten Spindelwelle aufnehmbar ist.

Gemäss einem ersten Aspekt der Erfindung wird die genannte Aufgabe dadurch gelöst, dass der Werkzeugkopf eine steuerbare Klemmeinrichtung aufweist, um das erste Spindellager und das zweite Spindellager gesteuert miteinander zu verbinden, bevorzugt im Wesentlichen starr miteinander zu verbinden, und dass dem Werkzeugkopf eine Steuereinrichtung zugeordnet ist, die dazu ausgebildet ist, die Klemmeinrichtung während eines Bearbeitungsvorgangs zu aktivieren und in Bearbeitungspausen zu deaktivieren.

Indem die beiden Spindellager während eines Bearbeitungsvorgangs gezielt miteinander verbunden werden, wird die Schwingungsneigung des Werkzeugkopfes entscheidend reduziert. Bei Bewegungen des Werkzeugkopfs , z.B. beim Abrichten oder Shiften, können zudem die Axialkräfte auf die Spindellager, die durch die Beschleunigung der Spindeleinheiten erzeugt werden, durch die Verbindung deutlich reduziert werden, und/oder diese Kräfte können gezielt auf diejenige Spindeleinheit verlagert werden, deren Spindellager stärker vorgespannt sind. Indem diese Verbindung in Bearbeitungspausen gezielt gelöst wird, werden thermische Spannungen, die sich während der Bearbeitung aufbauen können, wieder abgebaut. Auf diese Weise wird verhindert, dass aufgrund der thermischen Spannungen Lagerschäden auftreten. Bei dem Bearbeitungsvorgang kann es sich um die Bearbeitung eines Werkstücks mit dem Werkzeug handeln, oder es kann sich um eine Abrichtbearbeitung des Werkzeugs mit einer Abrichtvorrichtung handeln.

Der Werkzeugkopf weist mindestens einen Sensor zur Überwachung eines Betriebszustands des Werkzeugkopfs auf, insbesondere einen Temperatursensor, Vibrationssensor, Dehnungssensor, Kraftsensor oder Drucksensor. Die Steuereinrichtung kann dann dazu ausgebildet sein, den Sensor auszulesen und die Klemmeinrichtung unter Berücksichtigung einer vom Sensor ermittelten Messgrösse zu deaktivieren. Auf diese Weise kann die Verbindung zwischen den Spindellagern ganz gezielt dann gelöst werden, wenn es nötig ist.

Die Klemmeinrichtung kann insbesondere ein Dehnspannelement umfassen. Das Dehnspannelement kann starr mit dem ersten oder zweiten Spindellager verbunden sein. Es kann mit einem Gegenstück zusammenwirken, das starr mit dem anderen Spindellager verbunden ist, um das erste Spindellager und das zweite Spindellager miteinander zu verbinden. Statt eines Dehnspannelements kann aber auch eine andere Art von Klemmeinrichtung zum Einsatz kommen, z.B. eine mechanische, magnetische oder elektrische Klemmeinrichtung.

Die Klemmeinrichtung kann dazu ausgebildet sein, im aktivierten Zustand der Klemmeinrichtung Schwingungen zwischen den Spindeleinheiten zu dämpfen. Dazu kann die Klemmeinrichtung ein axiales Dämpfungselement aufweisen, oder die Klemmeinrichtung kann konstruktionsbedingt eine axiale Dämpfung verursachen, wie das z.B. bei einer Klemmung mit einem hydraulischen oder pneumatischen Zylinder der Fall sein kann. Die Klemmeinrichtung kann insofern auch als zuschaltbarer axialer Schwingungsdämpfer dienen.

In einigen Ausführungsformen sind erste Spindeleinheit und die zweite Spindeleinheit in einem gemeinsamen Spindelgehäuse aufgenommen. Das zweite Spindellager kann dann in einer axial gegenüber dem gemeinsamen Spindelgehäuse verschiebbaren Lageraufnahme gehalten sein. Die Klemmeinrichtung ist dann vorzugsweise dazu ausgebildet, die Lageraufnahme gesteuert zu fixieren, um das erste Spindellager und das zweite Spindellager miteinander zu verbinden. Wenn die Klemmeinrichtung ein Dehnspannelement umfasst, kann dieses als Dehnspannhülse ausgebildet sein und die Lageraufnahme radial umgeben.

In anderen Ausführungsformen sind die beiden Spindeleinheiten in separaten Spindelgehäusen aufgenommen. In diesem Fall weist also die erste Spindeleinheit ein erstes Spindelgehäuse auf, in dem das mindestens eine erste Spindellager gehalten ist, und die zweite Spindeleinheit weist ein zweites Spindelgehäuse auf, in dem das mindestens eine zweite Spindellager gehalten ist. Die Klemmeinrichtung ist dann vorzugsweise dazu ausgebildet, das erste Spindelgehäuse und das zweite Spindelgehäuse gesteuert miteinander zu koppeln, um das erste Spindellager und das zweite Spindellager miteinander zu verbinden. Dazu verbindet die Klemmeinrichtung vorzugweise die beiden Spindelgehäuse direkt miteinander. Wenn beispielsweise die beiden Spindelgehäuse verschiebbar an einer Basis gehalten sind, erfolgt die Verbindung also vorzugsweise nicht oder zumindest nicht ausschliesslich über eine Klemmung der einzelnen Spindelgehäuse an der Basis, sondern direkt zwischen den Spindelgehäusen.

Die Klemmeinrichtung kann zwei Elemente umfassen, wobei im deaktivierten Zustand der Klemmeinrichtung das erste dieser Elemente axial innerhalb des zweiten Elements (das das erste Element umgeben kann und z.B. eine Dehnspannhülse umfassen kann) verschiebbar ist, und wobei im aktivierten Zustand der Klemmeinrichtung die beiden Elemente axial gegeneinander fixiert sind. Vorteilhaft ist die Klemmeinrichtung dann derart ausgeführt, dass das erste Element nicht vollständig aus dem zweiten Element ausfahrbar ist, z.B. auch nicht bei einem Werkzeugwechsel, um zu verhindern, dass sich die beiden Elemente beim Zusammenschieben gegenseitig blockieren.

Gemäss einem zweiten Aspekt der Erfindung wird die oben genannte Aufgabe dadurch gelöst, dass der Werkzeugkopf ein Axialkraftelement aufweist, das dazu ausgebildet ist, eine axiale Vorspannkraft zwischen dem ersten Spindellager und dem zweiten Spindellager zu erzeugen.

Gemäss diesem Aspekt werden die beiden Spindeleinheiten also lagerseitig miteinander axial verspannt. Die Spindellager sind somit zwar axial nicht frei gegeneinander bewegbar, aber auch nicht völlig starr miteinander verbunden. Dadurch können die Spindellager thermischen Spannungen zumindest in einem gewissen Rahmen axial ausweichen. Auch auf diese Weise kann die Schwingungsneigung des Werkzeugkopfes erheblich reduziert werden, ohne dass die Gefahr von Lagerschäden durch thermische Spannungen entsteht.

Die beiden Aspekte können auch kombiniert werden. Insbesondere ist es möglich, die Spindellager mit einem Axialkraftelement gegeneinander zu verspannen und im verspannten Zustand während eines Bearbeitungsvorgangs mit einer Klemmeinrichtung miteinander zu verbinden und diese Verbindung in Bearbeitungspausen wieder zu lösen.

Das Axialkraftelement weist einen steuerbaren Aktor, insbesondere einen pneumatischen oder hydraulischen Aktor, auf, um die axiale Vorspannkraft gesteuert zu verändern, insbesondere gezielt zu lösen. Der Aktor kann so ausgebildet sein, dass er eine axiale Vorspannkraft erzeugt, die von der axialen Position des zweiten Spindellagers relativ zum ersten Spindellager im Wesentlichen unabhängig ist. Dies lässt sich beispielsweise mit einem pneumatischen oder hydraulischen Aktor leicht realisieren, da bei solchen Aktoren die Axialkraft häufig nur vom angelegten Druck, aber nicht von der Stellung des Aktors abhängt.

Dem Werkzeugkopf ist auch bei einer Ausgestaltung gemäss dem zweiten Aspekt der Erfindung eine Steuereinrichtung zugeordnet. Diese ist dazu ausgebildet, den Aktor anzusteuern, um die axiale Vorspannkraft zu regeln, beispielweise während des Bearbeitungsvorgangs konstant zu halten, und/oder gesteuert zu verändern, insbesondere in Bearbeitungspausen zu deaktivieren.

Der Werkzeugkopf weist wiederum mindestens einen Sensor zur Überwachung eines Betriebszustands des Werkzeugkopfs auf, insbesondere einen Temperatursensor, Vibrationssensor, Dehnungssensor, Kraftsensor oder Drucksensor. Die Steuereinrichtung ist dann dazu ausgebildet, den Sensor auszulesen und die axiale Vorspannkraft unter Berücksichtigung einer vom Sensor ermittelten Messgrösse zu verändern.

Wiederum können in einigen Ausführungsformen sowohl die erste Spindeleinheit als auch die zweite Spindeleinheit in einem gemeinsamen Spindelgehäuse aufgenommen sein, und es kann eine axial gegenüber dem Spindelgehäuse verschiebbare Lageraufnahme vorhanden sein, in der das mindestens eine zweite Spindellager gehalten ist. Das Axialkraftelement kann dann dazu ausgebildet sein, eine Axialkraft auf die Lageraufnahme auszuüben, um die axiale Vorspannkraft zu erzeugen. Dazu kann das Axialkraftelement insbesondere ringförmig sein und ein Spannelement zum axialen Verspannen des Werkzeugs mit der ersten Spindelwelle und der zweiten Spindelwelle umgeben. Insbesondere kann das Axialkraftelement einen ringförmigen Aktor umfassen.

In anderen Ausführungsformen können die Spindeleinheiten wiederum in separaten Spindelgehäusen aufgenommen sein. Das Axialkraftelement kann dann das erste Spindelgehäuse und das zweite Spindelgehäuse miteinander verbinden und dazu ausgebildet sein, eine Axialkraft zwischen dem ersten Spindelgehäuse und dem zweiten Spindelgehäuse auszuüben, um die axiale Vorspannkraft zu erzeugen.

Besondere Vorteile ergeben sich, wenn die beiden Spindelwellen axial mit dem Werkzeug verspannt werden, so dass beidseitig eine axiale Druckkraft auf das Werkzeug wirkt. Dazu ist die folgende Konstruktion besonders vorteilhaft: Die zweite Spindelwelle weist mindestens eine axiale Bohrung auf. Der Werkzeugkopf weist entsprechend mindestens eine Zugstange auf, die sich durch die entsprechende axiale Bohrung der zweiten Spindelwelle hindurch erstreckt, wobei die Zugstange an einem ersten Ende mit der ersten Spindelwelle verbindbar ist. Die Zugstange ist an ihrem zweiten Ende derart mit der zweiten Spindelwelle verbindbar, dass zwischen der ersten Spindelwelle und der zweiten Spindelwelle eine axiale Druckkraft auf das Werkzeug erzeugbar ist. Dazu weist das Werkzeug entsprechend ebenfalls mindestens eine axiale Bohrung auf, so dass die jeweilige Zugstange durch die entsprechende Bohrung des Werkzeugs hindurchgeführt werden kann.

Durch diese Art der axialen Verspannung entsteht eine Einheit aus den beiden Spindelwellen und dem Werkzeug, die in besonderem Masse torsions- und biegesteif ist. Die Kombination aus Zugstange und Spannelement ermöglicht dabei eine hohe axiale Druckkraft zwischen dem Werkzeug und den beiden Spindelwellen. Im Ergebnis wirkt die genannte Einheit wie eine einzige Welle. Gleichzeitig kann die genannte Konstruktion sehr kompakt ausgeführt werden. Dadurch eignet sich diese Konstruktion besonders für Werkzeuge mit einem kleinen Durchmesser. Das Werkzeug kann aber auch auf eine andere Art als mit einer durchgehenden Zugstange zwischen der ersten Spindelwelle und der zweiten Spindelwelle verspannt werden, solange dadurch eine fest verspannte, starre Einheit aus den beiden Spindelwellen und dem Werkzeug entsteht. Die Verspannung des Werkzeugs zwischen den beiden Spindelwellen zu einer starren Einheit ist dabei unabhängig von einer axialen Verspannung oder Klemmung der zugeordneten Spindellager.

Die genannte Konstruktion ist auch dann von Vorteil, wenn keine Klemmeinrichtungen oder Axialkraftelemente der vorstehend angegebenen Art vorhanden sind. Insofern bezieht sich die vorliegende Erfindung auch auf einen Werkzeugkopf für eine Werkzeugmaschine, insbesondere für eine Verzahnmaschine, aufweisend:
eine erste Spindeleinheit mit einer ersten Spindelwelle, die in der ersten Spindeleinheit um eine Werkzeugspindelachse drehbar gelagert ist; und
eine zweite Spindeleinheit mit einer zweiten Spindelwelle, die in der zweiten Spindeleinheit um die Werkzeugspindelachse drehbar gelagert ist,
wobei die erste Spindeleinheit und die zweite Spindeleinheit so angeordnet sind, dass ein Werkzeug axial zwischen der ersten Spindelwelle und der zweiten Spindelwelle aufnehmbar ist, um das Werkzeug zu einer Drehung um die Werkzeugspindelachse anzutreiben,
wobei die zweite Spindelwelle mindestens eine axiale Bohrung aufweist,
wobei der Werkzeugkopf mindestens eine Zugstange aufweist, die sich durch die axiale Bohrung der zweiten Spindelwelle hindurch erstreckt,
wobei die Zugstange an einem ersten Ende auf Zug mit der ersten Spindelwelle verbindbar ist, und
wobei die Zugstange an ihrem anderen Ende derart mit der zweiten Spindelwelle verbindbar ist, dass zwischen der ersten Spindelwelle und der zweiten Spindelwelle eine axiale Druckkraft auf das Werkzeug erzeugbar ist.

Dabei ist es wiederum von Vorteil, wenn die erste Spindeleinheit mindestens ein erstes Spindellager aufweist, wobei die erste Spindelwelle in dem ersten Spindellager um die Werkzeugspindelachse drehbar gelagert ist, und wobei das erste Spindellager dazu ausgebildet ist, sowohl Radial- als auch Axialkräfte aufzunehmen, und wenn die zweite Spindeleinheit entsprechend ein zweites Spindellager aufweist, wobei die zweite Spindelwelle in dem zweiten Spindellager um die Werkzeugspindelachse drehbar gelagert ist, und wobei das zweite Spindellager dazu ausgebildet ist, sowohl Radial- als auch Axialkräfte aufzunehmen.

Bevorzugt ist genau eine Zugstange vorhanden, die sich durch eine zentrale axiale Bohrung in der zweiten Spindelwelle hindurch erstreckt. Dementsprechend ist es bevorzugt, wenn auch das Werkzeug eine zentrale axiale Bohrung aufweist, durch die die Zugstange hindurchgeführt werden kann.

In einer besonders einfachen Ausführung ist die Zugstange mit der ersten Spindelwelle verbindbar, indem sie axial in die erste Spindelwelle eingeschraubt wird. Dazu können an dem entsprechenden Ende der Zugstange und an der ersten Spindelwelle zueinander komplementäre Gewinde ausgebildet sein. Es sind aber auch andere Verbindungsarten denkbar, z.B. eine bajonettartige Verbindung.

Die Zugstange kann vorteilhaft an ihrem anderen, freien Ende mit einem Spannelement versehen sein, das eine ringförmige Auflagefläche bildet, wobei die ringförmige Auflagefläche nach der Verbindung der Zugstrange mit der ersten Spindelwelle an der zweiten Spindelwelle anliegt und eine axiale Druckkraft auf die zweite Spindelwelle erzeugt, um diese in Richtung der ersten Spindelwelle zu drücken. Im einfachsten Fall kann die Zugstange dazu z.B. als Schraube mit einem Schraubenkopf ausgebildet sein. Die Schraube kann dann in die erste Spindelwelle einschraubbar sein, und der Schraubenkopf kann das Spannelement bilden. Die axiale Spannkraft wird dann ganz einfach durch Anziehen der Schraube erzeugt.

In einer anderen, ebenfalls sehr einfachen Ausführungsform ist die Zugstange an ihrem freien Ende mit einem Aussengewinde versehen, auf das eine Mutter aufschraubbar ist. In diesem Fall bildet die Mutter das Spannelement, und die axiale Spannkraft wird ganz einfach durch Anziehen der Mutter erzeugt.

Bevorzugt weist der Werkzeugkopf jedoch ein Spannelement auf, das lösbar mit der Zugstange verbindbar ist und eine Spannkraft erzeugt, die vorzugsweise rein axial wirkt, ohne dass ein Anziehen des Spannelements eine Drehmomentkomponente um die Werkzeugspindelachse erzeugt. Das Spannelement weist dazu ein Basiselement auf, das starr mit der Zugstange verbindbar ist, z.B. über eine Schraubverbindung, über ein Bajonett oder über eine Spannbuchse. Das Basiselement kann eine zentrale Aufnahmeöffnung aufweisen, um die Zugstange aufzunehmen, oder (wenn genügend Raum zur Verfügung steht) einen Zapfen, der in einer axialen Bohrung der Zugstange fixierbar ist. Das Spannelement weist zudem ein Axialdruckelement auf, das gegenüber dem Basiselement axial in Richtung der zweiten Spindelwelle bewegbar, insbesondere axial verschiebbar, ist, um die zweite Spindelwelle axial in Richtung der ersten Spindelwelle zu drücken. Das Axialdruckelement kann insbesondere ringförmig sein und die zentrale Aufnahmeöffnung oder den Zapfen des Basiselements umgeben; in diesem Fall kann das Axialdruckelement auch als "Druckring" bezeichnet werden. Das Axialdruckelement bildet die schon erwähnte ringförmige Auflagefläche. Das Spannelement weist ausserdem mindestens ein Betätigungselement auf, wobei das Betätigungselement relativ zum Basiselement bewegbar ist, um das Axialdruckelement relativ zum Basiselement axial zu bewegen. Als Betätigungselement kann z.B. eine Druckschraube dienen, die entlang einer Längs- oder Querrichtung in das Basiselement einschraubbar ist. Derartige Spannelemente sind aus dem Stand der Technik an sich bekannt und kommerziell in vielen Varianten erhältlich.

In einigen Ausführungsformen erfolgt die Kraftübertragung vom Betätigungselement zum Axialdruckelement rein mechanisch. Beispielsweise können als Betätigungselemente mehrere Zylinderschrauben dienen, die axial am Basiselement gehalten sind und in das Axialdruckelement einschraubbar sind, um dieses relativ zum Basiselement axial zu verschieben. In anderen Ausführungsformen dienen ein oder mehrere Gewindestifte, die im Basiselement über eine Gewindeverbindung in Richtung des Axialdruckelements verstellbar sind, als Betätigungselemente. In nochmals anderen Ausführungsformen wirkt das Betätigungselement beispielsweise auf ein Getriebe, das das Axialdruckelement vorschiebt. Derartige Spannelemente sind z.B. unter den Bezeichnungen ESB, ESG oder ESD von der Enemac GmbH, Kleinwallstadt, Deutschland erhältlich.

In anderen Ausführungsformen erfolgt die Kraftübertragung vom Betätigungselement zum Axialdruckelement hydraulisch. Dazu kann das Betätigungselement z.B. als Druckschraube ausgebildet sein, die beim Einschrauben einen Druck in einem Hydrauliksystem erzeugt, wobei dieser Druck auf das Axialdruckelement wirkt. Derartige Spannelemente sind beispielsweise von der Albert Schrem Werkzeugfabrik GmbH, Herbrechtingen, Deutschland erhältlich.

Um das Werkzeug zwischen den Spindelwellen aufzunehmen und ein Drehmoment auf das Werkzeug übertragen zu können, ist es von Vorteil, wenn an der ersten und/oder zweiten Spindelwelle eine Spindelnase derart ausgebildet ist, dass an der betreffenden Spindelnase durch eine zwischen dem Werkzeug und der Spindelnase wirkende axiale Druckkraft eine kraftschlüssige und/oder formschlüssige Verbindung zum Werkzeug herstellbar ist. Bevorzugt erfolgt die Verbindung zum Werkzeug über eine Konusverbindung, besonders bevorzugt über eine Konusverbindung mit Plananlage. Beispielsweise kann die Verbindung über eine der in DIN ISO 666:2013-12 genannten Ausführungen A, BF, BM, CF oder CM erfolgen.

Dabei ist es von Vorteil, wenn die beiden Spindelnasen derart unterschiedlich ausgebildet sind, dass das Werkzeug nur in einer vorbestimmten Lage zwischen den Spindelnasen aufnehmbar ist. Beispielsweise können die Durchmesser der beiden Spindelnasen unterschiedlich sein.

Um den Werkzeugwechsel zu erleichtern, ist es von Vorteil, wenn die zweite Spindeleinheit relativ zur ersten Spindeleinheit axial verschiebbar ist. Wenn beide Spindeleinheiten in einem gemeinsamen Spindelgehäuse untergebracht sind, kann dies dadurch erreicht werden, dass die Spindellager für die zweite Spindelwelle relativ zu diesem Spindelgehäuse axial verschiebbar sind.

Die erste und/oder zweite Spindeleinheit kann einen Antriebsmotor aufweisen, der dazu ausgebildet ist, die entsprechende Spindelwelle zu einer Drehung um die Werkzeugspindelachse anzutreiben, um so das Werkzeug anzutreiben. In einigen Ausführungsformen weist nur die erste Spindeleinheit einen Antriebsmotor auf, und die zweite Spindeleinheit bildet eine passive Gegenspindel für die erste Spindeleinheit, ohne einen eigenen Antriebsmotor. In anderen Ausführungsformen weist auch die zweite Spindeleinheit einen eigenen Antriebsmotor auf. Bei dem jeweiligen Antriebsmotor kann es sich insbesondere um einen Direktantrieb handeln.

Um die rotierende Einheit aus dem Werkzeug und den beiden Spindelwellen auszuwuchten, kann der Werkzeugkopf eine erste Wuchteinrichtung, die der ersten Spindeleinheit zugeordnet ist, und eine zweite Wuchteinrichtung, die der zweiten Spindeleinheit zugeordnet ist, aufweisen.

Bevorzugt umgibt die erste Wuchteinrichtung die erste Spindelwelle radial und ist axial zwischen einem werkzeugseitigen Spindellager der ersten Spindeleinheit und einem werkzeugseitigen Ende der ersten Spindelwelle angeordnet, und/oder die zweite Wuchteinrichtung umgibt die zweite Spindelwelle radial und ist axial zwischen einem werkzeugseitigen Spindellager der zweiten Spindeleinheit und einem werkzeugseitigen Ende der zweiten Spindelwelle angeordnet.

Wenn zwischen der ersten Spindelwelle und der zweiten Spindelwelle ein Werkzeug aufgenommen ist, ist die erste und/oder zweite Wuchteinrichtung also ausserhalb der jeweiligen Spindelwelle axial zwischen einem werkzeugseitigen Spindellager der zugeordneten Spindeleinheit und dem Werkzeug angeordnet. Durch die vorgeschlagene Anordnung wird es möglich, auch Werkzeuge mit kleinem Durchmesser effizient auszuwuchten. Indem mindestens eine der Wuchteinrichtungen um die Spindelwellen herum angeordnet ist, bevorzugt beide Wuchteinrichtungen, steht wesentlich mehr Platz für die Wuchtelemente zur Verfügung, als wenn beide Wuchteinrichtungen innerhalb des Werkzeugs oder innerhalb der Spindelwellen angeordnet sind. Dadurch können auch verhältnismässig grosse Unwuchten korrigiert werden. Durch die Anordnung der entsprechenden Wuchteinrichtung axial zwischen einem werkzeugseitigen Spindellager und dem Werkzeug erfolgt das Auswuchten mit dieser Wuchteinrichtung sowohl nahe beim Werkzeug als auch nahe bei den entsprechenden Lagerstellen. Dadurch wird ein sehr präzises Auswuchten möglich.

Die jeweilige Spindeleinheit wird häufig mehr als ein einziges Spindellager aufweisen. Unter einem "werkzeugseitigen Spindellager" ist dann dasjenige Spindellager zu verstehen, das innerhalb der betreffenden Spindeleinheit entlang der Werkzeugspindelachse am nächsten zum Werkzeug angeordnet ist.

Insbesondere kann folgende Anordnung der Wuchtebenen relativ zu den Lagerebenen der beiden Spindeleinheiten vorliegen: Das werkzeugseitige erste Spindellager definiert eine erste Lagerebene senkrecht zur Werkzeugspindelachse, und das werkzeugseitige zweite Spindellager definiert eine zweite Lagerebene senkrecht zur Werkzeugspindelachse. Die erste Wuchteinrichtung definiert eine erste Wuchtebene senkrecht zur Werkzeugspindelachse, und die zweite Wuchteinrichtung eine zweite Wuchtebene senkrecht zur Werkzeugspindelachse. Es ist dann bevorzugt, wenn die erste Wuchtebene zwischen der ersten Lagerebene und der zweiten Wuchtebene (insbesondere näher bei der ersten Lagerebene als bei der zweiten Wuchtebene) und/oder die zweite Wuchtebene zwischen der zweiten Lagerebene und der ersten Wuchtebene (insbesondere näher bei der zweiten Lagerebene als bei der ersten Wuchtebene) angeordnet ist.

Wenn ein Werkzeug zwischen den beiden Spindelwellen aufgenommen ist, definiert das Werkzeug eine Schwerpunktebene senkrecht zur Werkzeugspindelachse, die den Schwerpunkt des Werkzeugs enthält. Die erste Wuchtebene liegt dann vorzugsweise zwischen der ersten Lagerebene und der Schwerpunktebene, und/oder die zweite Wuchtebene liegt vorzugsweise zwischen der zweiten Lagerebene und der Schwerpunktebene. Dabei ist es bevorzugt, wenn die jeweilige Wuchtebene näher bei der entsprechenden Lagerebene als bei der Schwerpunktebene liegt.

Durch diese Anordnung der Wuchtebenen wird ein effizientes Zwei-Ebenen-Auswuchten ermöglicht.

In bevorzugten Ausführungsformen ist die erste Wuchteinrichtung und/oder die zweite Wuchteinrichtung als Ringwuchtsystem ausgebildet. Ringwuchtsysteme sind aus dem Stand der Technik seit langem bekannt (siehe z.B. DE4337001A1, US5757662A) und ermöglichen ein sehr präzises automatisches Auswuchten, ohne dass die Drehung der Spindeln gestoppt werden muss. Sie sind auf dem Markt in verschiedenen Ausführungen erhältlich. Stattdessen kann aber auch eine andere Art von Wuchtsystem, z.B. ein Wuchtsystem mit elektromotorisch bewegbaren Wuchtgewichten oder ein Hydrowuchtsystem, eingesetzt werden.

Die Wuchteinrichtungen können dazu ausgebildet sein, NC-gesteuert zu arbeiten. Dazu kann die erste und/oder zweite Wuchteinrichtung mindestens einen Aktor aufweisen, um eine Korrekturunwucht der betreffenden Wuchteinrichtung NC-gesteuert zu verstellen.

Am Werkzeugkopf kann mindestens ein Schwingungssensor zur Erfassung von Schwingungen, die durch eine Unwucht hervorgerufen werden, vorgesehen sein. Dieser Sensor kann in eine der Wuchteinrichtungen integriert sein oder separat ausgebildet sein. Dem Werkzeugkopf kann zudem eine Steuereinrichtung zugeordnet sein, die dazu ausgebildet ist, Signale von dem mindestens einen Schwingungssensor zu erfassen und die Aktoren in der ersten und/oder zweiten Wuchteinrichtung anzusteuern, um Korrekturunwuchten in der ersten und/oder zweiten Wuchteinrichtung in Abhängigkeit von den erfassten Signalen zu verstellen. Diese Verstellung kann automatisiert derart erfolgen, dass die Unwucht verringert wird. Bevorzugt ist die Steuereinrichtung dazu ausgebildet, ein automatisches Zwei-Ebenen-Wuchten durchzuführen. Entsprechende Algorithmen sind aus dem Stand der Technik hinlänglich bekannt. Die Steuereinrichtung kann Teil einer Maschinensteuerung sein oder eine separate Einheit sein.

Die erste und/oder zweite Wuchteinrichtung ist vorzugweise ausserhalb des Gehäuses der jeweiligen Spindeleinheit angeordnet. Insbesondere kann die erste Spindeleinheit ein erstes Gehäuse und die zweite Spindeleinheit ein zweites Gehäuse aufweisen. Die erste und/oder zweite Wuchteinrichtung ist dann vorzugsweise ausserhalb des ersten und zweiten Gehäuses angeordnet. Alternativ können die ersten und zweiten Spindeleinheiten ein gemeinsames Spindelgehäuse aufweisen, und die erste und/oder zweite Wuchteinrichtung ist dann vorzugsweise ausserhalb des gemeinsamen Spindelgehäuses angeordnet.

Insbesondere ist die erste Wuchteinrichtung vorzugsweise axial zwischen dem die erste Spindeleinheit umschliessenden (ersten oder gemeinsamen) Spindelgehäuse und dem Werkzeug angeordnet, und die zweite Wuchteinrichtung ist axial zwischen dem die zweite Spindeleinheit umschliessenden (zweiten oder gemeinsamen) Spindelgehäuse und dem Werkzeug angeordnet, wenn das Werkzeug zwischen der ersten Spindelwelle und der zweiten Spindelwelle aufgenommen ist.

Die Aussenkonturen der Wuchteinrichtungen sind vorzugsweise derart optimiert, dass die Störkontur bei der Bearbeitung von Werkstücken auf einer Werkstückspindel der Maschine minimiert wird. Konkret ist es von Vorteil, wenn die erste und/oder zweite Wuchteinrichtung eine Aussenkontur aufweist, die sich in Richtung des Werkzeugs verjüngt.

Der Werkzeugkopf kann des Weiteren das schon erwähnte Werkzeug aufweisen, wobei das Werkzeug dann axial zwischen der ersten Spindelwelle und der zweiten Spindelwelle aufgenommen und vorzugsweise axial verspannt ist. Das Werkzeug kann ein Schleifwerkzeug sein, insbesondere ein Werkzeug für das Verzahnungsschleifen. Konkret kann das Werkzeug als Schleifschnecke oder Profilschleifscheibe ausgebildet sein oder mindestens eine Schleifschnecke und/oder mindestens eine Profilschleifscheibe umfassen. Das Werkzeug kann einteilig sein (z.B. in Form einer nicht abrichtbaren Schleifschnecke mit einem hartstoffbelegten Grundkörper, der direkt zwischen den Spindelwellen aufgenommen ist), oder es kann zwei- oder mehrteilig sein (z.B. in Form einer abrichtbaren Schleifschnecke oder eines Kombiwerkzeugs mit mehr als einem Schleifkörper, wobei der oder die Schleifkörper auf einer separaten Werkzeugaufnahme gehalten sind und die Werkzeugaufnahme zwischen den Spindelwellen aufgenommen ist).

Die vorliegende Erfindung stellt ausserdem eine Werkzeugmaschine zur Verfügung, die einen Werkzeugkopf der vorstehend genannten Art und mindestens eine Werkstückspindel, um ein Werkstück zur Drehung um eine Werkstückachse anzutreiben, aufweist. Die Werkzeugmaschine kann als Verzahnmaschine ausgebildet sein, insbesondere als Verzahnungsschleifmaschine. Dazu kann die Werkzeugmaschine eine Maschinensteuerung aufweisen, die dazu ausgebildet (insbesondere entsprechend programmiert) ist, die Maschine zu veranlassen, eine Verzahnung eines Werkstücks, das auf der mindestens einen Werkstückspindel aufgenommen ist, mit dem Werkzeug zu bearbeiten. Insbesondere kann die Maschinensteuerung dazu ausgebildet sein, die Maschine dazu zu veranlassen, die Verzahnung des Werkstücks durch Profilschleifen oder Wälzschleifen zu bearbeiten. Zu diesem Zweck kann die Maschinensteuerung dazu ausgebildet sein, eine geeignete Wälzkopplung zwischen der Werkstückspindel und der Werkzeugspindel herzustellen.

Die vorliegende Erfindung stellt ausserdem ein Verfahren zum Betrieb eines Werkzeugkopfes der vorstehend geschilderten Art zur Verfügung. Das Verfahren umfasst:
Verbinden des ersten Spindellagers und das zweite Spindellagers während eines Bearbeitungsvorgangs und Lösen der Verbindung in Bearbeitungspausen; und/oder
Erzeugen einer axialen Vorspannkraft zwischen dem ersten Spindellager und dem zweiten Spindellager.

Für das Verfahren gelten die vorstehend diskutierten weitergehenden Überlegungen zum Werkzeugkopf entsprechend.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein Beispiel für eine Werkzeugmaschine zur Hartfeinbearbeitung von Zahnrädern durch Wälzschleifen in einer schematischen perspektivischen Ansicht, mit einem Werkzeugkopf gemäss einer ersten Ausführungsform;
- Fig. 2: den Werkzeugkopf der ersten Ausführungsform in einer schematischen perspektivischen Ansicht;
- Fig. 3: den Werkzeugkopf der ersten Ausführungsform in einer perspektivischen Schnittdarstellung;
- Fig. 4: den Werkzeugkopf der ersten Ausführungsform in einer perspektivischen Schnittdarstellung nach der Entfernung des Werkzeugs;
- Fig. 5: einen Werkzeugkopf gemäss einer zweiten Ausführungsform in einer schematischen perspektivischen Ansicht;
- Fig. 6: den Werkzeugkopf der zweiten Ausführungsform in einer perspektivischen Schnittdarstellung;
- Fig. 7: den Werkzeugkopf der zweiten Ausführungsform in einer perspektivischen Schnittdarstellung nach der Entfernung des Werkzeugs;
- Fig. 8: die Klemmeinrichtung des Werkzeugkopfs der zweiten Ausführungsform in einem zentralen Längsschnitt;
- Fig. 9: einen Werkzeugkopf gemäss einer dritten Ausführungsform in einer perspektivischen Schnittdarstellung;
- Fig. 10: den Werkzeugkopf der dritten Ausführungsform in einer perspektivischen Schnittdarstellung nach der Entfernung des Werkzeugs;
- Fig. 11: einen Werkzeugkopf gemäss einer vierten Ausführungsform in einer schematischen perspektivischen Ansicht;
- Fig. 12: den Werkzeugkopf der vierten Ausführungsform in einer perspektivischen Schnittdarstellung;
- Fig. 13: eine Spannmutter in einem zentralen Längsschnitt; und
- Fig. 14: die Spannmutter der Fig. 13 in einer perspektivischen Ansicht.

### BESCHREIBUNG BEVORZUGTER AUSFÜHRUNGSFORMEN

### Definitionen

*Verzahnmaschine:* Eine Maschine, die für die Erzeugung oder Bearbeitung von Verzahnungen an Werkstücken ausgebildet ist, insbesondere von Innen- oder Aussenverzahnungen an Zahnrädern. Beispielsweise kann es sich dabei um eine Feinbearbeitungsmaschine handeln, mit der vorverzahnte Werkstücke bearbeitet werden, insbesondere um eine Hartfeinbearbeitungsmaschine, mit der vorverzahnte Werkstücke nach dem Härten bearbeitet werden. Eine Verzahnmaschine weist eine Maschinensteuerung auf, die so programmiert ist, dass sie eine automatische Bearbeitung der Verzahnung steuern kann.

*Wälzbearbeitung:* Eine Art der Verzahnungsbearbeitung, bei der ein Werkzeug auf einem Werkstück abwälzt und dabei eine Schnittbewegung erzeugt. Es sind verschiedene Wälzbearbeitungsverfahren bekannt, wobei zwischen Verfahren mit geometrisch unbestimmter Schneide wie Wälzschleifen oder Wälzhonen und Verfahren mit geometrisch bestimmter Schneide wie Wälzfräsen, Wälzschälen, Wälzschaben oder Wälzstossen unterschieden wird.

*Wälzschleifen:* Beim Wälzschleifverfahren handelt es sich um ein kontinuierliches spanabhebendes Verfahren mit geometrisch unbestimmter Schneide zur Herstellung achssymmetrischer periodischer Strukturen, bei dem als Werkzeug eine Schleifscheibe mit schneckenförmig profilierter Aussenkontur ("Schleifschnecke") verwendet wird. Werkzeug und Werkstück werden auf Rotationsspindeln aufgenommen. Durch eine Kopplung der Drehbewegungen von Werkzeug und Werkstück um die Drehachsen wird die verfahrenstypische Wälzbewegung realisiert. Durch diese Wälzbewegung und eine axiale Vorschubbewegung des Werkzeugs oder des Werkstücks entlang der Werkstückachse wird eine Schnittbewegung erzeugt.

*Werkzeugkopf:* Als "Werkzeugkopf" wird im vorliegenden Dokument eine Baugruppe bezeichnet, die dazu ausgebildet ist, ein Bearbeitungswerkzeug aufzunehmen und zu einer Drehung anzutreiben. Der Werkzeugkopf kann insbesondere auf einem Schwenkkörper und/oder einem oder mehreren Schlitten montiert sein, um das Werkzeug relativ zu einem Werkstück auszurichten und zu positionieren.

*Spindeleinheit:* Im Werkzeugmaschinenbau wird eine drehbare Welle, auf der ein Werkzeug oder Werkstück aufspannbar ist, meist als "Spindel" bezeichnet. Häufig wird aber auch eine Baugruppe, die neben der drehbaren Welle auch die zugehörigen Spindellager zur drehbaren Lagerung der Welle und das zugehörige Gehäuse umfasst, als "Spindel" bezeichnet. Im vorliegenden Dokument wird der Begriff "Spindel" in diesem Sinne verwendet. Die Welle alleine wird als "Spindelwelle" bezeichnet. Eine Baugruppe, die neben der Spindelwelle mindestens auch die zugehörigen Spindellager umfasst, wird als "Spindeleinheit" bezeichnet. Eine "Spindeleinheit" kann ein eigenes Gehäuse umfassen, sie kann aber auch zusammen mit einer weiteren Spindeleinheit in einem gemeinsamen Gehäuse aufgenommen sein.

*Ringwuchtsystem:* Ein Ringwuchtsystem weist zwei benachbart angeordnete Wuchtringe auf, die eine Welle umgeben und von dieser mitgenommen werden. Jeder Wuchtring weist eine vorgegebene Zusatzunwucht gleicher Grösse auf. Die Orientierung der Wuchtringe um die Rotationsachse der Welle ist einstellbar. Wenn sich die Zusatzunwuchten der beiden Wuchtringe diametral gegenüberstehen, heben sich deren Wirkungen auf. Wenn beide Zusatzunwuchten dieselbe Winkelstellung haben, wird die maximale Auswuchtkapazität erreicht. Durch das Einstellen auf andere Winkel kann die resultierende Korrekturunwucht innerhalb dieser Grenzen nach Grösse und Richtung frei eingestellt werden.

### Aufbau einer beispielhaften Werkzeugmaschine

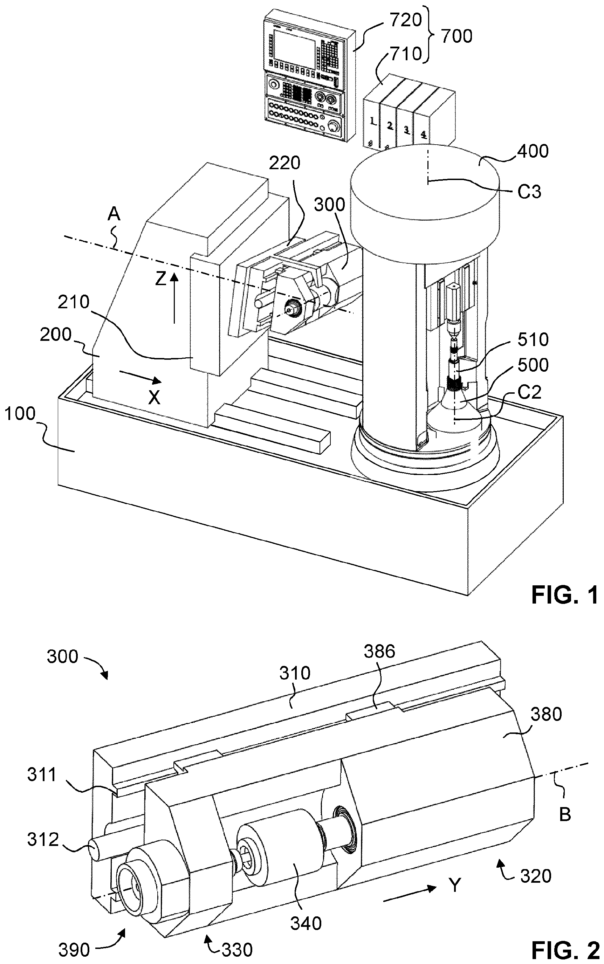

In der Fig. 1 ist beispielhaft eine Werkzeugmaschine zur Hartfeinbearbeitung von Zahnrädern durch Wälzschleifen dargestellt. Die Maschine weist ein Maschinenbett 100 auf, auf dem ein Werkzeugträger 200 entlang einer horizontalen Zustellrichtung X verschiebbar angeordnet ist. Ein Z-Schlitten 210 ist entlang einer vertikalen Richtung Z verschiebbar am Werkzeugträger 200 angeordnet. Der Z-Schlitten 210 trägt einen Schwenkkörper 220, der gegenüber dem Z-Schlitten 210 um eine horizontale Schwenkachse A schwenkbar ist. Die Schwenkachse A verläuft parallel zur Zustellrichtung X. Auf dem Schwenkkörper 220 ist ein nur symbolisch dargestellter Werkzeugkopf 300 angeordnet, der nachstehend näher beschrieben wird.

Auf dem Maschinenbett 100 ist ausserdem ein schwenkbarer Werkstückträger in Form eines Drehturms 400 angeordnet. Der Drehturm 400 ist um eine vertikale Schwenkachse C3 zwischen mehreren Drehstellungen verschwenkbar. Er trägt zwei Werkstückspindeln 500, auf denen jeweils ein Werkstück 510 aufspannbar ist. Jede der Werkstückspindeln 500 ist zu einer Drehung um eine Werkstückachse antreibbar. In der Fig. 1 ist die Werkstückachse der sichtbaren Werkstückspindel 500 mit C2 bezeichnet. Die Werkstückachse der in Fig. 1 nicht sichtbaren Werkstückspindel wird als C1-Achse bezeichnet. Die beiden Werkstückspindeln befinden sich auf dem Drehturm 400 in diametral gegenüberliegenden (d.h. bezüglich der Schwenkachse C3 um 180° versetzten) Positionen. Auf diese Weise kann eine der beiden Werkstückspindeln be- und entladen werden, während auf der anderen Werkstückspindel ein Werkstück bearbeitet wird. Dadurch werden unerwünschte Nebenzeiten weitgehend vermieden. Ein derartiges Maschinenkonzept ist z.B. aus WO 00/035621 A1 bekannt.

Die Maschine weist eine nur symbolisch dargestellte Maschinensteuerung 700 auf, welche mehrere Steuerungsmodule 710 sowie eine Bedientafel 720 umfasst. Jedes der Steuerungsmodule 710 steuert eine Maschinenachse an und/oder empfängt Signale von Sensoren.

### Werkzeugkopf gemäss einer ersten Ausführungsform

In den Figuren 2 bis 4 ist ein Werkzeugkopf gemäss einer ersten Ausführungsform illustriert. Der Werkzeugkopf umfasst eine Basis 310, die starr mit dem Schwenkkörper 220 verbunden ist. Auf der Basis 310 ist eine Linearführung 311 ausgebildet. Auf der Linearführung 311 ist ein Spindelgehäuse 380 entlang einer Shiftrichtung Y verschiebbar geführt. Hierzu weist das Spindelgehäuse 380 entsprechende Führungsschuhe 386 auf. Die Shiftrichtung Y verläuft senkrecht zur X-Achse und in einem um die A-Achse einstellbaren Winkel zur Z-Achse. Zur gesteuerten Verstellung der Position des Spindelgehäuses 380 entlang der Shiftrichtung Y dient ein Kugelgewindetrieb 312, der mit einem nicht zeichnerisch dargestellten Shiftantrieb zusammenwirkt.

In dem Spindelgehäuse 380 sind zwei Spindeleinheiten 320, 330 aufgenommen. Zwischen den Spindeleinheiten 320, 330 ist ein Werkzeug 340 gehalten. Im vorliegenden Beispiel handelt es sich bei dem Werkzeug 340 um eine Schleifschnecke.

### Aufbau der Spindeleinheiten

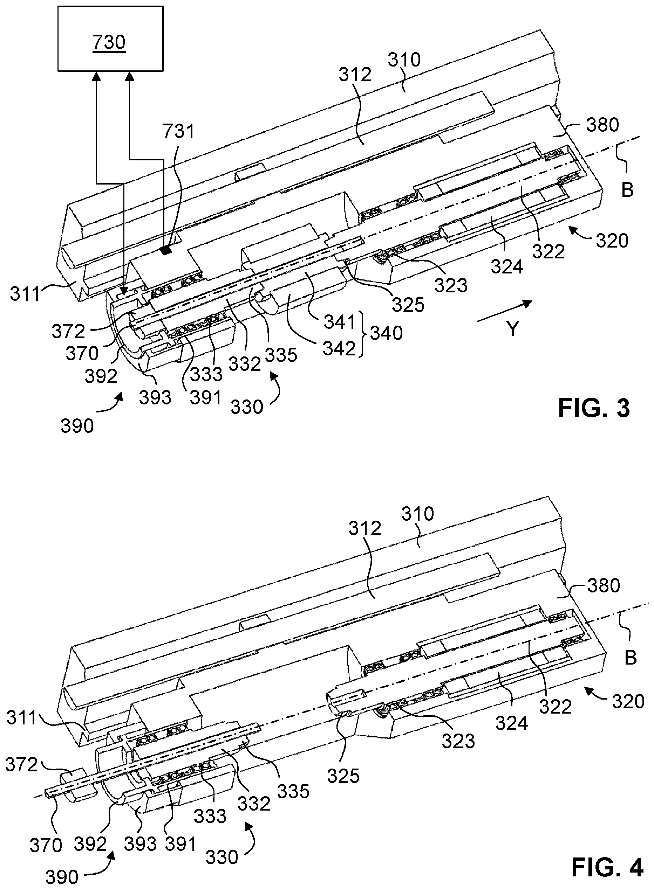

In den Figuren 3 und 4 ist der Aufbau der Spindeleinheiten 320, 330 näher illustriert.

Im vorliegenden Beispiel handelt es sich bei der Spindeleinheit 320 um eine Motorspindel mit einem Antriebsmotor 324, der direkt eine erste Spindelwelle 322 zur einer Drehung um eine Werkzeugspindelachse B antreibt. Die Werkzeugspindelachse B verläuft parallel zur Shiftrichtung Y.

Die erste Spindelwelle 322 an drei Lagerstellen in Spindellagern 323 gelagert. Die Lagerstellen befinden sich an unterschiedlichen axialen Positionen entlang der ersten Spindelwelle 322. Zwei dieser Lagerstellen befinden sich zwischen dem Antriebsmotor 324 und dem werkzeugseitigen Ende der ersten Spindeleinheit 320. Die entsprechenden Spindellager bilden ein Fest-Los-Lager oder ein Stützlager, d.h. an mindestens einer dieser Lagerstellen können die Spindellager sowohl radiale als auch axiale Kräfte aufnehmen. Eine weitere Lagerstelle befindet sich auf der werkzeugabgewandten Seite des Antriebsmotors 324. Das an dieser Lagerstelle angeordnete Spindellager ist als Loslager ausgebildet, d.h., es nimmt Radialkräfte auf, ermöglicht aber axiale Bewegungen. Alle drei Spindellager 323 sind ortsfest im Spindelgehäuse 380 angeordnet. Sie sind gegenüber dem Spindelgehäuse 380 insbesondere nicht axial verschiebbar.

Bei der zweiten Spindeleinheit 330 handelt es sich im vorliegenden Beispiel um eine nicht angetriebene Gegenspindel. Die zweite Spindeleinheit 330 weist eine zweite Spindelwelle 332 auf, die im Spindelgehäuse 380 an zwei Lagerstellen entlang der Spindelwelle in Spindellagern 333 gelagert ist. Diese Spindellager bilden wiederum ein Fest-Los-Lager oder ein Stützlager, d.h. an mindestens einer dieser Lagerstellen können die Spindellager 333 sowohl radiale als auch axiale Kräfte aufnehmen.

Die zweite Spindeleinheit 330 ist gegenüber dem Spindelgehäuse 380 zwischen einer Betriebsstellung, wie sie in der Fig. 3 dargestellt ist, und einer Werkzeugwechselstellung, wie sie in der Fig. 4 dargestellt hat, axial verschiebbar. Dazu sind die Spindellager 333 der zweiten Spindeleinheit 330 in einer Lageraufnahme 391 aufgenommen. Im vorliegenden Beispiel ist die Lageraufnahme eine Lagerbüchse, die z.B. als Gleitbüchse oder Kugelrollbüchse ausgebildet sein kann. Die Lageraufnahme 391 ist im Spindelgehäuse 380 axial verschiebbar geführt. In der Betriebsstellung der Fig. 3 ist die zweite Spindeleinheit 330 so weit in Richtung der ersten Spindeleinheit 320 vorgeschoben, dass zwischen der ersten Spindelwelle 322 und der zweiten Spindelwelle 332 das Werkzeug 340 gehalten ist. In der Werkzeugwechselstellung der Fig. 4 wurde die zweite Spindeleinheit 330 dagegen genügend weit axial zurückgezogen, dass das Werkzeug 340 entnommen werden kann.

### Axiale Verspannung des Werkzeugs

Das Werkzeug 340 weist im vorliegenden Beispiel eine Werkzeugaufnahme 341 auf, der einen schneckenförmig profilierten, abrichtbaren Schleifkörper 342 trägt. Die Werkzeugaufnahme 341 ist im vorliegenden Beispiel als Aufnahmeflansch für den Schleifkörper nach DIN ISO 666:2013-12 ausgebildet. Zur Verbindung mit den Spindelwellen 322, 332 weist die Werkzeugaufnahme 341 an beiden Enden jeweils eine Kegelaufnahme mit Plananlage auf, beispielsweise eine Kurzkegelaufnahme 1:4 nach DIN ISO 702-1:2010-04.

An den werkzeugseitigen Enden der Spindelwellen 322, 332 sind sich gegenüberstehende Spindelnasen 325, 335 ausgebildet. Die Form der Spindelnasen 324, 325 ist komplementär zur Form der Kegelaufnahmen der Werkzeugaufnahme 341. Sie weisen jeweils eine zum Werkzeug 340 hin konisch zulaufende Form und eine Planauflagefläche an ihrer jeweiligen Stirnseite auf. Beispielsweise kann jede Spindelnase als Kegelschaft 1:4 nach DIN ISO 702-1:2010-04 ausgebildet sein.

In der Betriebsstellung der Fig. 3 besteht zwischen dem Werkzeug 340 und den Spindelwellen 322, 332 also jeweils eine Konusverbindung mit Plananlage. Die Konusverbindungen können an den beiden Enden des Werkzeugs unterschiedliche Durchmesser aufweisen, um sicherzustellen, dass das Werkzeug 340 nur in der korrekten Orientierung zwischen den Spindelwellen 322, 332 aufgenommen werden kann.

Das Werkzeug 340 wird mit einer Zugstange 370 und einer Spannmutter 372 zwischen den Spindelwellen 332, 332 axial auf Druck verspannt. Dazu weisen das Werkzeug 340 und die zweite Spindelwelle 332 jeweils eine durchgehende zentrale axiale Bohrung auf. An ihrem werkzeugseitigen Ende weist auch die erste Spindelwelle 322 eine zentrale axiale Bohrung auf. Diese Bohrung ist im vorliegenden Beispiel nicht durchgehend. Sie ist werkzeugseitig offen, und in der Bohrung ist ein Innengewinde ausgebildet. Die Zugstange 370 ist durch die zentralen Bohrungen der Spindelwelle 332 und des Werkzeugs 340 hindurchgeschoben. Die Zugstange 370 weist an ihrem zur ersten Spindeleinheit 320 hin weisenden Ende ein Aussengewinde auf, das in das Innengewinde der ersten Spindelwelle 322 eingeschraubt ist. An ihrem anderen Ende weist sie ebenfalls ein Aussengewinde auf. Auf dieses Aussengewinde ist die Spannmutter 372 aufgeschraubt. Durch Anziehen der Spannmutter 372 übt die Spannmutter 372 einen axialen Druck auf die zweite Spindelwelle 332 in Richtung des Werkzeugs 340 aus. Dadurch wird das Werkzeug 340 zwischen den Spindelwellen 332, 332 axial verspannt. Im Ergebnis entsteht so eine einzige durchgehende Welle mit hoher Steifigkeit.

### Axiale Verspannung der Lageraufnahme

Die Lageraufnahme 391 mit den darin aufgenommenen Spindellagern 333 der zweiten Spindeleinheit 330 kann gegenüber dem Spindelgehäuse 380 axial verspannt werden. Insgesamt wird so die zweite Spindeleinheit 330 gegenüber der ersten Spindeleinheit 320 nicht nur an den Spindelwellen 322, 323 über das Werkzeug 340, sondern auch lagerseitig axial verspannt. Auf diese Weise kann eine axiale Druck- oder Zugkraft zwischen den Spindellagern 323 der ersten Spindeleinheit 320 und den vorderen Spindellagern 333 der zweiten Spindeleinheit erzeugt werden, um diese vorzuspannen. Zur Erzeugung der axialen Druck- oder Zugkraft dient ein ringförmiger Aktor 390, der im vorliegenden Beispiel als pneumatischer Aktor ausgebildet ist. Der Aktor 390 weist ein ringförmiges Aktorgehäuse 393 auf, das starr mit dem Spindelgehäuse 380 verbunden ist. In dem Aktorgehäuse 393 ist ein ebenfalls ringförmiges Kolbenelement 392 verschiebbar geführt. Das Kolbenelement 392 ist starr mit der Lageraufnahme 391 verbunden. Das Aktorgehäuse 393 und das Kolbenelement 392 begrenzen gemeinsam einen Ringraum, dessen Volumen von der axialen Stellung des Kolbenelements 392 im Aktorgehäuse 393 abhängt. Durch Einleiten von Druckluft in den Ringraum wird das Kolbenelement 392 entweder in Richtung der ersten Spindeleinheit 320 oder von dieser weg gedrückt und erzeugt dadurch bei eingespanntem Werkzeug 340 eine axiale Druck- oder Zugkraft zwischen den in der Lageraufnahme 391 gehaltenen Spindellagern 333 der zweiten Spindeleinheit 330 und den Spindellagern 323 der ersten Spindeleinheit 320.

Eine Steuereinrichtung 730 steuert den Aktor 390 in an sich bekannter Weise. Beispielsweise wirkt die Steuereinrichtung 730 mit einem nicht zeichnerisch dargestellten Pneumatikventil in einer Druckleitung zum Aktor 390 zusammen, um den Druck im Aktor 390 zu verändern.

Indem der Aktor 390 ringförmig ausgebildet ist, bleibt das hintere Ende der zweiten Spindelwelle 332 von aussen her durch den Aktor 390 hindurch zugänglich, um das Werkzeug 340 axial zwischen der ersten Spindelwelle 322 und der zweiten Spindelwelle 332 verspannen zu können. Die Spannmutter 372 kann sich dabei in einem Bereich befinden, der vom ringförmigen Aktor 390 umgeben ist.

### Betrieb der Werkzeugspindel

Um ein Werkzeug 340 zwischen den Spindeleinheiten 320, 330 einzuspannen, wird die zweite Spindeleinheit 330 zunächst in die Werkzeugwechselstellung der Fig. 4 gebracht, und die Spannmutter 372 wird von der Zugstange 370 entfernt. Das Werkzeug 340 wird eingesetzt, und die Zugstange 370 wird durch das Werkzeug hindurch in die Bohrung der ersten Spindelwelle 322 eingeführt und dort durch Einschrauben fixiert. Die zweite Spindeleinheit 330 wird nun in die Betriebsstellung der Fig. 3 gebracht. In dieser Stellung wird die Spannmutter 372 an der Zugstange 370 angebracht, und das Werkzeug 340 wird mit Hilfe der Spannmutter 372 axial mit der ersten Spindelwelle 321 und der zweiten Spindelwelle 332 verspannt. Der Aktor 390 bleibt bis zu diesem Punkt funktionslos, um die axiale Verschiebbarkeit der zweiten Spindeleinheit 330 nicht zu behindern. Nachdem das Werkzeug 340 verspannt wurde, wird der Aktor 390 aktiviert, um die Spindellager 333 der zweiten Spindeleinheit 330 axial gegen das Spindelgehäuse 380 zu verspannen.

Das Werkzeug 340 wird nun durch den Antriebsmotor 324 in Drehung versetzt und zur Bearbeitung eines Werkstücks eingesetzt. Während der Bearbeitung erwärmen sich sowohl das Spindelgehäuse 380 als auch die Einheit aus den beiden Spindelwellen 322, 332 und dem dazwischen axial verspannten Werkzeug 340. Dadurch dehnen sich das Spindelgehäuse 380 und die genannte Einheit thermisch aus. Die thermische Ausdehnung dieser Teile wird in der Regel unterschiedlich sein. Während der Bearbeitung wird der im Aktor wirkende pneumatische Druck konstant gehalten. Auf diese Weise können die Spindellager 333 der zweiten Spindeleinheit 330 der thermischen Ausdehnung der Spindelwellen 322, 332 und des Rotors 340 folgen, und die axiale Spannkraft auf die Spindellager bleibt auch bei unterschiedlichen thermischen Ausdehnungen konstant.

Optional kann die Steuereinrichtung 730 dazu ausgebildet sein, den Druck im Aktor 390 in Abhängigkeit von einer oder mehreren Messgrössen zu verändern. Dazu kann beispielsweise am Spindelgehäuse 380 ein nur symbolisch dargestellter Sensor 731 angebracht sein, der von der Steuereinrichtung 370 ausgelesen wird. Bei dem Sensor 731 kann es sich z.B. um einen Temperatursensor, einen Schwingungssensor, einen Dehnungsmessstreifen oder einen Kraftsensor zur Messung der axialen Spannkraft handeln. Die Steuereinrichtung 730 kann den Druck im Aktor dann in Abhängigkeit von Messgrössen des Sensors 731 verändern, um beispielsweise Schwingungen zu reduzieren oder bei erhöhter Spindelbelastung, wie sie durch eine erhöhte Temperatur oder thermische Ausdehnung angezeigt wird, die axiale Spannkraft gezielt zu erhöhen.

### Alternativen zur pneumatischen Verspannung

Statt eines pneumatischen Aktors kann auch eine andere Art von Aktor zur Erzeugung einer axialen Druck- oder Zugkraft zwischen den Spindellagern eingesetzt werden-Beispielsweise kann auch ein hydraulischer Aktor eingesetzt werden. Die obenstehenden Überlegungen zu einem pneumatischen Aktor gelten analog auch für einen hydraulischen Aktor. Der Aktor kann aber auch ein mechanischer Aktor sein. Dieser kann z.B. eine Schraubenfeder aufweisen, die eine axiale Zug- oder Druckkraft zwischen dem Spindelgehäuse 380 und der Lageraufnahme 391 erzeugt. Der Kompressionsgrad der Schraubenfeder und somit die von ihr erzeugte Axialkraft können dann durch einen geeigneten Antrieb verändert werden Axialkraft mit einem Piezoelement erzeugt. Eine Vielzahl weiterer Ausgestaltungen ist denkbar.

Zusätzlich oder alternativ zu einer axialen Verspannung der Lageraufnahme 391 durch einen Aktor ist es denkbar, die Lageraufnahme 391 auf eine gesteuerte Weise axial gegenüber dem Spindelgehäuse 380 zu fixieren (zu "klemmen"). Dazu kann eine zeichnerisch nicht dargestellten Klemmeinrichtung vorgesehen sein, z.B. eine Dehnspannhülse, die im Spindelgehäuse 380 angebracht ist und die Lageraufnahme 391 umgibt. Mit Hilfe der Klemmeinrichtung kann die Lageraufnahme 391 gezielt während der Werkstückbearbeitung am Spindelgehäuse 380 fixiert werden, um Schwingungen zu minimieren, und diese Fixierung kann in Bearbeitungspausen, z.B. nach jedem Werkzeughub oder nach der Bearbeitung jedes Werkstücks, kurz gelöst werden, um übermässige axiale Lagerkräfte abzubauen. Hierzu kann wiederum die Steuereinrichtung 730 eingesetzt werden. Das Lösen kann anhand von Messgrössen gesteuert werden. Beispielweise kann die Steuereinrichtung 730 dazu mit dem Sensor 731 wiederum eine Temperatur, Schwingungen, eine thermische Ausdehnung und/oder eine axiale Kraft zwischen den Spindellagern erfassen und die Klemmeinrichtung in Abhängigkeit von den erfassten Messgrössen von Zeit zu Zeit lösen. Wenn sowohl ein Aktor zur Erzeugung einer Axialkraft als auch eine Klemmeinrichtung vorhanden sind, kann die Klemmung erfolgen, nachdem die Spindellager 323, 333 mit Hilfe des Aktors vorgespannt wurden.

Der Aktor 390 kann auch so betrieben werden, dass er eine lösbare Klemmung ohne Erzeugung einer axialen Vorspannkraft bewirkt. Wenn der Aktor ein pneumatischer oder hydraulischer Aktor ist, erzeugt das Fluid gleichzeitig eine federnde Rückstellwirkung kombiniert mit einer Dämpfung, d.h. die Klemmung hat eine endliche Härte. Dies kann zusätzlich dazu beitragen, eine Überlastung der Spindellager zu vermeiden. Vorteilhaft könnte zudem mit dem Aktor 390 die Lageraufnahme 391 beim Werkzeugwechsel zurückgezogen werden.

### Zweite Ausführungsform

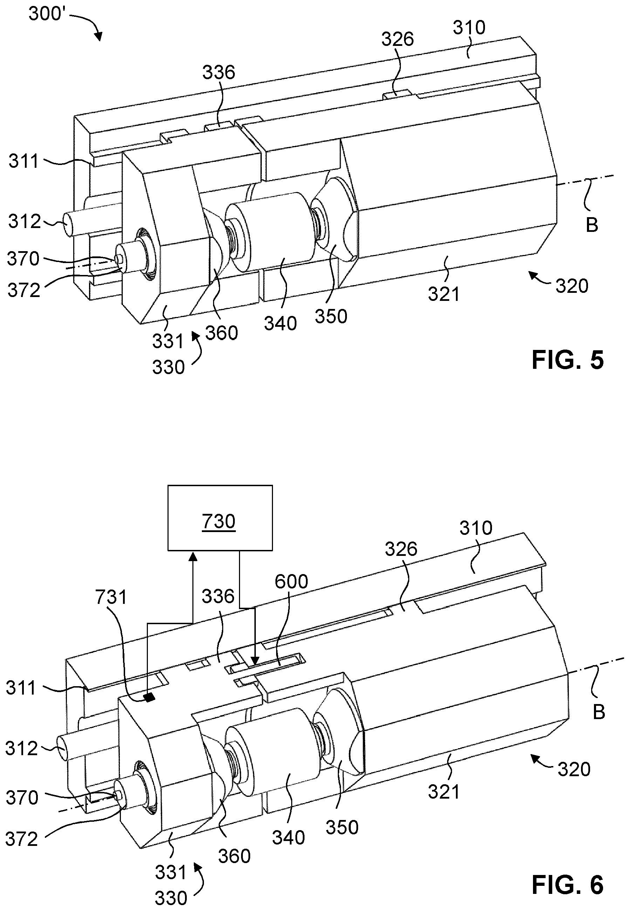

In den Figuren 5 bis 8 ist ein Werkzeugkopf gemäss einer zweiten Ausführungsform illustriert. Gleiche oder gleichwirkende Teile sind mit denselben Bezugszeichen wie bei der ersten Ausführungsform versehen.

Im Gegensatz zur ersten Ausführungsform weist die erste Spindeleinheit 320 ein eigenes erstes Gehäuse 321 auf, und die zweite Spindeleinheit 330 weist ein eigenes zweites Gehäuse 331 auf. Die Gehäuse 321, 331 sind unabhängig voneinander auf der Linearführung 311 der Basis 310 entlang der Shiftrichtung Y geführt. Dazu weist das jeweilige Gehäuse Führungsschuhe 326, 336 auf. Die Position des ersten Gehäuses 321 ist mit Hilfe eines zeichnerisch nicht dargestellten Shiftantriebs und des Kugelgewindetriebs 312 entlang der Shiftrichtung Y verstellbar. Das zweite Gehäuse 331 kann auf eine nachstehend näher beschriebene Weise mit dem ersten Gehäuse 321 gekoppelt werden, so dass es bei einer Verschiebung des ersten Gehäuses 321 entlang der Shiftrichtung Y von diesem mitgenommen wird. Die Spindellager sind axial unverschieblich im jeweiligen Gehäuse 321, 323 gehalten. Im Gegensatz zur ersten Ausführungsform entfällt eine axial verschiebliche Lageraufnahme für die Spindellager der zweiten Spindeleinheit 330. Auch entfällt ein Aktor zur axialen Verstellung der verschieblichen Lageraufnahme. Die beiden Spindeleinheiten 320, 330 sind ansonsten gleich aufgebaut wie in der ersten Ausführungsform.

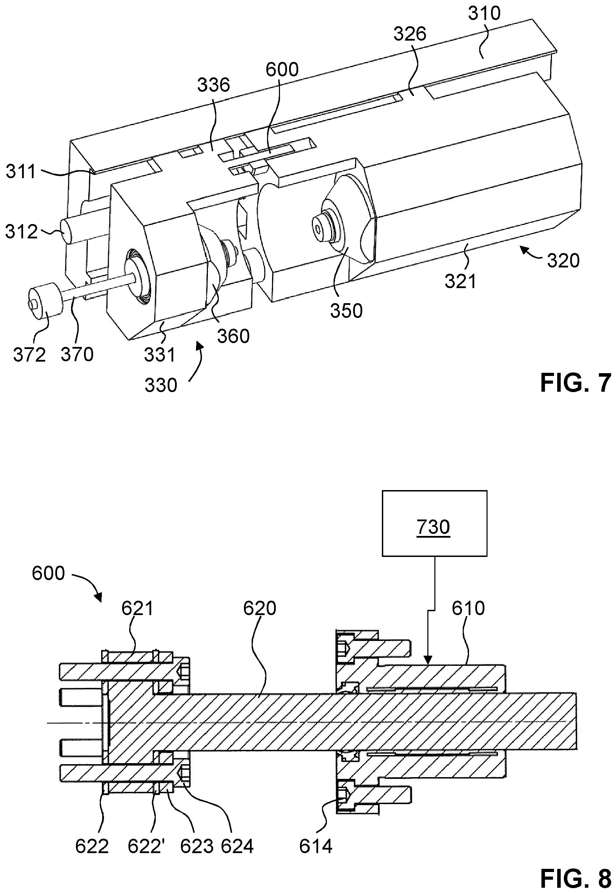

Um die Gehäuse 321, 331 gesteuert miteinander zu koppeln bzw. die Kopplung zu lösen, weist der Werkzeugkopf im vorliegenden Beispiel zwei Klemmeinrichtungen 600 auf. Eine dieser Klemmeinrichtungen ist oberhalb einer zentralen Mittenebene des Werkzeugkopfs angeordnet, die andere Klemmeinrichtung unterhalb dieser Mittenebene. Als zentrale Mittenebene wird dabei diejenige Ebene in X-Y-Richtung bezeichnet, die die Werkstückspindelachse B enthält. Nur die obere Klemmeinrichtung ist in den Figuren 6 und 7 erkennbar. Die Klemmeinrichtung 600 ist in der Fig. 8 alleine dargestellt.

Die Klemmeinrichtung 600 umfasst eine sich in axialer Richtung erstreckende Stange 620, die über einen Montageflansch 621 mit dem zweiten Spindelgehäuse 331 verbunden ist. Zwischen dem Montageflansch 621 und dem zweiten Spindelgehäuse 331 ist ein Dämpfungsring 622 angeordnet. Ein weiterer Dämpfungsring 622' befindet sich auf der anderen axialen Seite zwischen dem Montageflansch 621 und einem Druckring 623. Die Dämpfungsringe 622, 622' werden bei der Montage der Stange 620 durch Schrauben 624 in axialer Richtung komprimiert und dämpfen Schwingungen zwischen der Stange 620 und dem zweiten Spindelgehäuse 331. Sie können auch entfallen.

Die Klemmeinrichtung 600 umfasst des Weiteren eine Dehnspannhülse 610, die über Schrauben 614 mit dem ersten Spindelgehäuse 621 verbunden ist. Die Dehnspannhülse 610 kann hydraulisch betätigt werden, um wahlweise eine Klemmung der Stange 620 in der Dehnspannhülse 610 herbeizuführen oder diese Klemmung zu lösen.

Die Klemmeinrichtung 600 wird durch eine Steuereinrichtung 730 gesteuert. Optional kann dazu am ersten und/oder zweiten Spindelgehäuse 321, 331 wiederum ein Sensor 731 angebracht sein, der von der Steuereinrichtung 370 ausgelesen wird. Bei dem Sensor 731 kann es sich z.B. wie in der ersten Ausführungsform um einen Temperatursensor, Schwingungssensor, Dehnungssensor oder Kraftsensor handeln. Die Steuereinrichtung 730 kann dann dazu ausgebildet sein, die Klemmeinrichtung 600 in Abhängigkeit von einer oder mehreren Messgrössen des Sensors zu betätigen. Die beiden Klemmeinrichtungen 600 können gemeinsam oder unabhängig voneinander betätigt werden. Beispielsweise kann es bei gewissen Schwingungsformen unter Umständen sinnvoll sein, nur eine der beiden Klemmeinrichtungen 600 zu betätigen.

Wenn die Klemmung beider Klemmeinrichtungen 600 gelöst ist, kann die zweite Spindeleinheit 320 von Hand zwischen der Betriebsstellung der Figuren 5 und 6 und der Werkzeugwechselstellung der Fig. 7 entlang der Y-Richtung verschoben werden.

### Betrieb der Werkzeugspindel

Vor dem Beginn der Werkstückbearbeitung wird die Klemmeinrichtung 600 aktiviert, um das zweite Spindelgehäuse 331 am ersten Spindelgehäuse 321 zu fixieren. Das Werkzeug 340 wird nun durch den Antriebsmotor 324 in Drehung versetzt und zur Bearbeitung eines Werkstücks eingesetzt. Während der Bearbeitung bleibt das zweite Spindelgehäuse 331 am ersten Spindelgehäuse 321 fixiert, um Schwingungen zu vermeiden. Allerdings erwärmen sich sowohl die Spindelgehäuse 321, 331 als auch die Einheit aus den beiden Spindelwellen 322, 332 und dem dazwischen axial verspannten Werkzeug 340. Um übermässige axiale Lagerkräfte durch eine unterschiedliche thermische Ausdehnung zu vermeiden, löst die Steuereinrichtung 730 die Klemmeinrichtungen 600 in Bearbeitungspausen von Zeit zu Zeit, z.B. nach jedem Werkzeughub oder nach der Bearbeitung jedes Werkstücks. Dies kann optional anhand von Messgrössen erfolgen. Beispielweise kann die Steuereinrichtung 730 dazu eine Temperatur, eine Längenausdehnung oder eine axiale Lagerkraft erfassen und die Klemmeinrichtungen 600 in Abhängigkeit von den erfassten Messgrössen von Zeit zu Zeit lösen.

### Wuchteinrichtungen

Auf der ersten Spindelwelle 322 im axialen Bereich zwischen dem Gehäuse 321 der ersten Spindeleinheit 320 und dem Werkzeug 340 eine erste Wuchteinheit 350 angeordnet. Eine zweite Wuchteinheit 360 ist auf der zweiten Spindelwelle 332 axial zwischen dem Gehäuse 331 der zweiten Spindeleinheit 330 und dem Werkzeug 340 angeordnet. Die Wuchteinheiten 350, 360 umgeben die jeweilige Spindelwelle 322, 332 ausserhalb des Gehäuses der jeweiligen Spindeleinheit 320, 330. Sie weisen jeweils ein Gehäuse auf, das sich von der zugeordneten Spindeleinheit in Richtung des Werkzeugs 340 verjüngt. Durch die sich verjüngende Aussenkontur der Wuchteinheiten 350, 360 wird die Gefahr von Kollisionen zwischen den Wuchteinrichtungen und einem Werkstück 510 vermindert.

Jede der Wuchteinheiten 350, 360 ist als Ringwuchtsystem ausgebildet. Dazu weist jede der Wuchteinheiten 350, 360 einen Rotor mit zwei Wuchtringen auf, die die jeweilige Spindelwelle umgeben und von dieser mitgenommen werden. Jede der Wuchteinheiten 350, 360 weist ausserdem einen Stator auf. Dieser ist mit dem jeweiligen Spindelgehäuse 321, 331 verbunden. Der Stator enthält einerseits Sensoren zur Detektion von Schwingungen des jeweiligen Spindelgehäuses, der Drehzahl der jeweiligen Spindelwelle und der Winkelposition jedes Wuchtrings. Andererseits enthält der Stator einen Aktor mit einer Spulenanordnung, um die Winkelposition der Wuchtringe auf der jeweiligen Spindelwelle berührungslos zu verändern.

Mit den Wuchteinheiten kann die statische und dynamische Unwucht des Systems aus dem Werkzeug 340 und den damit verspannten Spindelwellen 322, 332 kompensiert werden, um das System in zwei Wuchtebenen auszuwuchten.

Ringwuchtsysteme zum automatischen Zwei-Ebenen-Wuchten sind an sich bekannt und von verschiedenen Anbietern kommerziell erhältlich. Beispielhaft sei das elektromagnetische Ringwuchtsystem AB 9000 der Hofmann Mess- und Auswuchttechnik GmbH & Co. KG, Pfungstadt, Deutschland genannt.

Derartige Wuchteinheiten können auch bei der ersten Ausführungsform vorgesehen werden. Um die zweite Spindeleinheit 330 für den Werkzeugwechsel zurückziehen zu können, kann der Rotor der zweiten Wuchteinheit 360 gegenüber dem Stator dieser Wuchteinheit axial verschiebbar sein. Der Aussendurchmesser des Rotors kann kleiner als der Innendurchmesser desjenigen Bereichs des Spindelgehäuses 380, in dem die Lageraufnahme 391 geführt ist, gewählt werden. Wenn die zweite Spindeleinheit 330 axial aus dem Spindelgehäuse 380 zurückgezogen wird, nimmt diese den Rotor der zweiten Wuchteinheit 360 in der axialen Richtung mit, so dass dieser gemeinsam mit der zweiten Spindeleinheit 330 in das Spindelgehäuse 380 zurückgezogen wird. Der Stator der zweiten Wuchteinheit 360 ist dagegen am Spindelgehäuse 380 fixiert und bleibt beim Rückzug der zweiten Spindeleinheit 330 unbeweglich.

Alternativ ist es auch denkbar, die zweite Wuchteinheit 360 so anzuordnen, dass die gesamte zweite Wuchteinheit 360, d.h. sowohl der Rotor als auch der Stator, gemeinsam mit der zweiten Spindeleinheit 330 zurückgezogen werden kann, um das Werkzeug zu wechseln.

Wuchteinheiten der hier beschriebenen Art sind auch bei den nachstehend erläuterten weiteren Ausführungsformen vorhanden.

### Dritte Ausführungsform

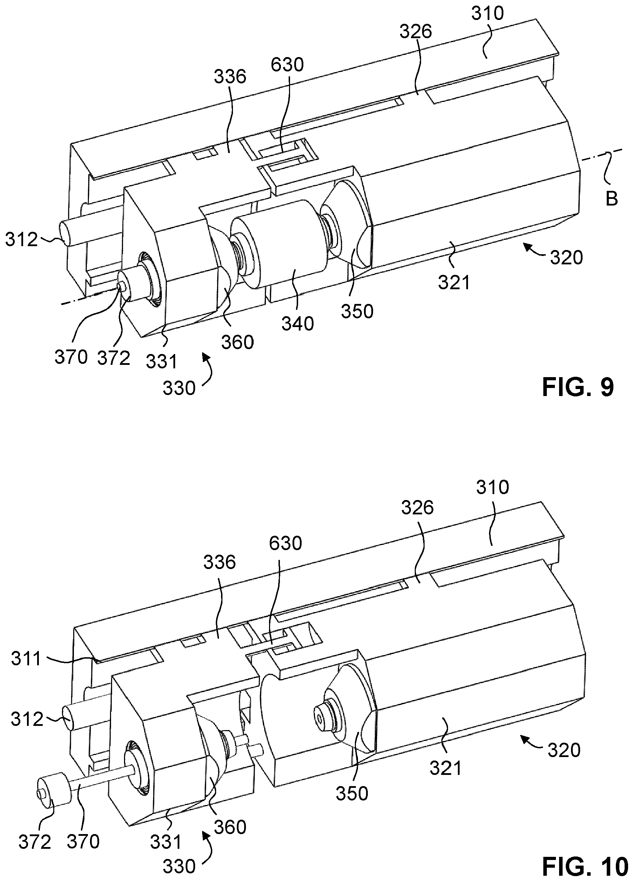

Eine dritte Ausführungsform ist in den Figuren 9 und 10 illustriert. Die dritte Ausführungsform unterscheidet sich von der zweiten Ausführungsform dadurch, dass das zweite Spindelgehäuse 320 nicht durch eine gesteuert lösbare Klemmung am ersten Spindelgehäuse 310 fixiert wird, sondern gegenüber dem ersten Spindelgehäuse 310 axial verspannt wird. Zur Erzeugung einer entsprechenden axialen Druck- oder Zugkraft dienen zwei pneumatische Aktoren 630, die anstelle der Klemmeinrichtungen 600 zwischen den beiden Spindelgehäusen 310, 320 angeordnet sind. In den Figuren 9 und 10 ist nur einer dieser beiden Aktoren sichtbar.

Für weitergehende Überlegungen zum Betrieb, zur Wirkung der axialen Verspannung der Spindellager und zu Alternativen zu pneumatischen Aktoren für die Erzeugung der Axialkraft wird auf die Ausführungen zur ersten Ausführungsform verwiesen.

Eine Klemmung und eine axiale Verspannung können auch kombiniert werden. Dazu kann der Werkzeugkopf sowohl gesteuert lösbare Klemmeinrichtungen wie in der zweiten Ausführungsform als auch Aktoren zur Erzeugung einer Axialkraft aufweisen. Die Klemmung kann dann erfolgen, nachdem die Spindellager 323, 333 mit Hilfe der Aktoren vorgespannt wurden.

Die Aktoren 630 können gegebenenfalls auch so betrieben werden, dass sie eine lösbare Klemmung ohne Erzeugung einer axialen Vorspannkraft bewirken. Wenn die Aktoren pneumatische oder hydraulische Aktoren sind, erzeugt das Fluid bei der Klemmung Wenn die Aktoren pneumatische oder hydraulische Aktoren sind, erzeugt das Fluid bei der Klemmung eine gewisse Federwirkung kombiniert mit einer Dämpfung, d.h. die Klemmung hat eine endliche Härte. Dies kann zusätzlich dazu beitragen, eine Überlastung der Spindellager zu vermeiden. Vorteilhaft könnte zudem mit den Aktoren 630 die zweite Spindeleinheit 330 beim Werkzeugwechsel zurückgeschoben werden.

### Vierte Ausführungsform

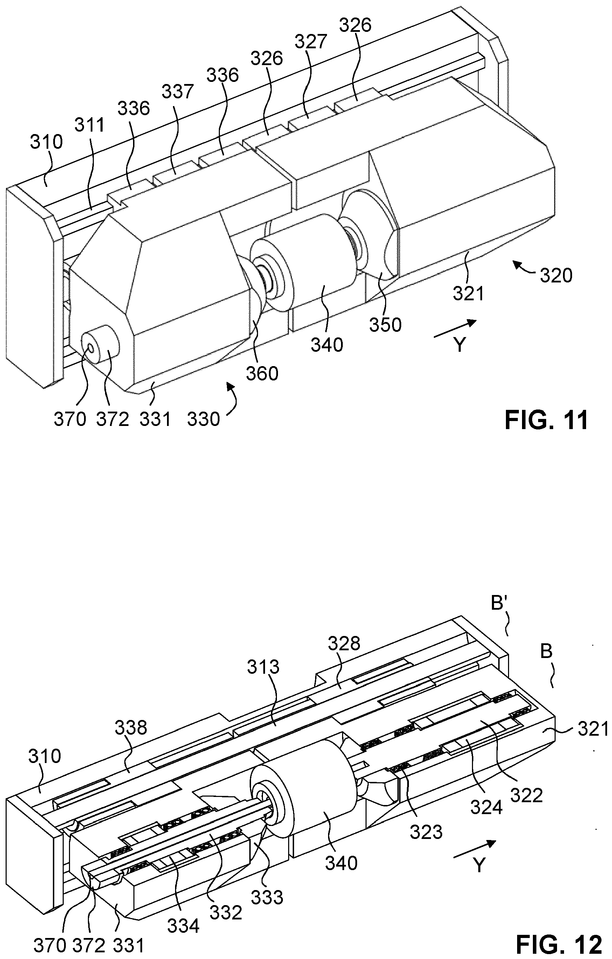

In den Figuren 11 bis 13 ist ein Werkzeugkopf gemäss einer vierten Ausführungsform illustriert.

Die erste und zweite Spindeleinheit 320, 330 weisen wiederum jeweils ein eigenes Spindelgehäuse 321, 331 auf, und die Spindelgehäuse sind mit Führungsschuhen 326, 336 unabhängig voneinander auf der Linearführung 311 geführt. Jede Spindeleinheit weist einen eigenen Verstellantrieb 328, 338, um die jeweilige Spindeleinheit unabhängig von der anderen Spindeleinheit entlang der Y-Richtung zu bewegen. Dazu weist der jeweilige Verstellantrieb 328, 338 einen Torquemotor, der eine spielfreie, vorgespannte Kugelgewindemutter zu einer Drehung um eine Drehachse B' antreibt. Die Kugelgewindemuttern laufen auf einer feststehenden Kugelgewindespindel 313, die entlang der Drehachse B' angeordnet ist. Die Drehachse B' verläuft parallel zur Y-Richtung und parallel zur Werkzeugspindelachse B.

Jedes der beiden Spindelgehäuse 321, 322 kann optional über eine Klemmeinrichtung 327, 337 klemmend mit der Basis 310 verbunden werden. In einigen Ausgestaltungen wird mit der Klemmeinrichtung 327, 337 eine Verbindung zwischen dem jeweiligen Spindelgehäuse und der Basis hergestellt, die nicht vollkommen starr ist, sondern in axialer Richtung elastisch gedämpft ausgeführt ist. Dazu weist jedes der beiden Spindelgehäuse einen Hilfskörper auf, der lösbar durch Klemmung an der Basis 310 fixierbar und im gelösten Zustand gemeinsam mit dem jeweiligen Spindelgehäuse 321, 331 gegenüber der Basis 310 bewegbar ist, und mindestens einen Schwingungsdämpfer, der zwischen dem Hilfskörper und dem beweglichen Körper angeordnet ist. Für Details einer solchen Ausgestaltung wird auf WO2020038751A1 verwiesen.

Für die Werkstückbearbeitung wird das zweite Spindelgehäuse 331 wie bei der zweiten oder dritten Ausführungsform gesteuert lösbar durch Klemmung am ersten Spindelgehäuse 321 fixiert und/oder gegenüber dem ersten Spindelgehäuse 321 axial verspannt. Für mögliche Ausgestaltungen der Verbindung zwischen den Spindelgehäusen und für Überlegungen zum Betrieb wird auf die obenstehenden Ausführungen zur zweiten und dritten Ausführungsform verwiesen.

Während der Werkstückbearbeitung können optional die Klemmeinrichtungen 327, 337 aktiviert werden, um die beiden Spindelgehäuse 321, 331 an der Basis 310 zu fixieren. Um die Position des Werkzeugs 340 relativ zum Werkstück entlang der Y-Achse zu verändern, werden die Klemmeinrichtungen 327, 337 gelöst, und die beiden Verstellantriebe 328, 338 werden synchron angesteuert, um beide Spindelgehäuse 321, 331 synchron gegenüber der Basis 310 zu verschieben.

Die zweite Spindelwelle 332 ist separat angetrieben, mit einem zweiten Antriebsmotor 334. Vorzugsweise ist der zweite Antriebsmotor 334 kleiner dimensioniert als der erste Antriebsmotor 324, so dass er weniger als die Hälfte des gesamten Drehmoments auf das Werkzeug 340 erzeugt, z.B. zwischen 30% und 45% des gesamten Drehmoments. Durch diese asymmetrische Verteilung der Drehmomentenerzeugung zwischen den beiden Antriebsmotoren 324, 334 werden störende Resonanzen vermieden. Der zweite Antriebsmotor kann aber auch entfallen.

### Spannmutter

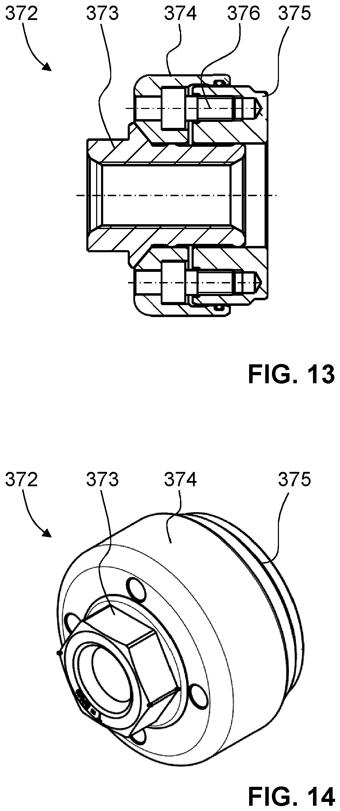

In den Figuren 13 und 14 ist beispielhaft eine Spannmutter 372 illustriert, wie sie in den vorstehend beschriebenen Ausführungsformen zum Einsatz kommen kann.

Die Spannmutter 372 weist ein Basiselement 373 auf, das eine zentrale Bohrung mit einem Innengewinde definiert, um das Basiselement 373 auf eine Zugstange mit einem entsprechenden Aussengewinde aufzuschrauben. An einem Ende ist das Basiselement 373 aussenseitig nach Art einer Sechskantmutter ausgebildet. Auf dem Basiselement 373 ist ein Stützring 374 angebracht. Dieser liegt an einem Bund des Basiselements 373 derart an, dass er an einer axialen Bewegung in einer Richtung (in der Fig. 9 nach links) gehindert ist. Auf dem Basiselement 373 ist ausserdem ein ringförmiges Axialdruckelement 375 axial verschiebbar geführt. Mehrere Betätigungselemente 376 in Form von Druckschrauben sind in das Axialdruckelement 375 eingeschraubt und derart axial am Stützring 374 abgestützt, dass sie entlang einer Richtung (in der Fig. 9 nach links) an einer axialen Bewegung gehindert sind. Indem die Druckschrauben aus dem Axialdruckelement 375 herausgeschraubt werden, wird das Axialdruckelement 375 gegenüber dem Basiselement 373 entlang derjenigen Richtung, die der Stützrichtung entgegengesetzt ist (in Fig. 9 nach rechts) vorgeschoben.

Um ein Werkzeug 340 zwischen den beiden Spindelwellen 322, 332 zu verspannen, wird das Axialdruckelement 375 zunächst gegenüber dem Basiselement 373 ganz zurückbewegt, indem die Druckschrauben so weit wie möglich in das Axialdruckelement 375 eingeschraubt werden. Nun wird die Spannmutter 372 auf die Zugstange 370 aufgeschraubt und mit Hilfe des aussenseitigen Sechskants am Basiselement 373 an die zweite Spindelwelle 332 angestellt. Dies erfolgt mit einem verhältnismässig geringen Drehmoment. Anschliessend wird mit Hilfe der Druckschrauben das ringförmige Axialdruckelement 375 kontrolliert so weit in Richtung der zweiten Spindelwelle 332 vorgeschoben, bis die gewünschte Spannkraft auf das Werkzeug 340 wirkt. Dabei liegt das Axialdruckelement 375 mit einer ringförmigen Auflagefläche an der zweiten Spindelwelle 332 an.

Selbstverständlich sind auch andere Konstruktionen einer Spannmutter einsetzbar, wie sie aus dem Stand der Technik an sich bekannt sind. Die Kraftübertragung kann z.B. auf eine andere Weise als dargestellt erfolgen. Insbesondere kann eine hydraulische Spannmutter eingesetzt werden.

Statt einer Spannmutter mit Innengewinde kann auch ein Spannelement eingesetzt werden, das auf eine andere Weise als über eine Schraubverbindung mit der Zugstange verbindbar ist, z.B. über ein Bajonett oder über eine Spannbuchse.

### Weitere Abwandlungen

Die Schnittstelle zwischen den Spindelwellen 322, 332 und dem Werkzeug 340 kann auch anders als in den vorstehend beschriebenen Ausführungsformen ausgebildet sein. Insbesondere kann eine andere Art von Konusverbindung und/oder eine Plananlage zum Einsatz kommen. Insbesondere können beliebige bekannte Konus-Verbindungen eingesetzt werden, z.B. die in DIN ISO 666:2013-12 genannten Ausführungen A, BF, BM, CF oder CM. Für Details wird auf die DIN ISO 666:2013-12 sowie auf die darin genannten weiteren Normen DIN EN ISO 1119:2012-04, DIN ISO 702-1:2010-04, ISO 12164-1:2001-12 und ISO 12164-2:2001-12 verwiesen.

In allen Ausführungsformen kann sich die Zugstange 370 statt durch die zweite Spindelwelle 332 durch die erste Spindelwelle 322 hindurch erstrecken und an ihrem Ende mit der zweiten Spindelwelle 332 verbunden sein. Das Spannelement übt dann entsprechend eine Axialkraft auf die erste Spindelwelle in Richtung der zweiten Spindelwelle aus.

Um das Werkzeug 340 axial zwischen der ersten Spindelwelle 322 und der zweiten Spindelwelle 332 zu verspannen, können statt einer zentralen Zugstange oder ergänzend dazu auch zwei oder mehr Zugstangen eingesetzt werden, die parallel zueinander und radial beabstandet zur Werkzeugspindelachse B verlaufen und in unterschiedlichen Winkelpositionen relativ zur Werkzeugspindelachse B angeordnet sind.

Die Fixierung des Werkzeugs zwischen der ersten Spindelwelle und der zweiten Spindelwelle kann auch auf eine andere Weise als mit einer durchgehenden Zugstange erfolgen, beispielsweise mit im Inneren der jeweiligen Spindelwelle angeordneten Spannsystemen. Dazu kann die Verbindung zwischen dem Werkzeug und den Spindelwellen z.B. über Hohlschaftkegel nach ISO 12164-1:2001-12 und ISO 12164-2:2001-12 erfolgen.

Die Klemmung zwischen den Spindellagern auf den beiden Seiten des Werkzeugs kann auch auf eine andere Weise als mit einem Hydrodehnelement erfolgen, z.B. mechanisch mittels einer Kombination aus Zahnstange und Zahnrad, durch einen exzentrischen Drehhebel, durch eine Klinke usw., oder elektromagnetisch.

In den vorstehend beschriebenen Ausführungsformen weist das Werkzeug 340 einen schneckenförmig profilierten, abrichtbaren Schleifkörper 342 auf, der auswechselbar auf eine Werkzeugaufnahme 341 montiert ist. Das Werkzeug kann aber auch anders ausgebildet sein, insbesondere einteilig. Beispielsweise kann es sich bei dem Werkzeug um eine nicht abrichtbare CBN-Schleifschnecke handeln, deren CBN-Beschichtung direkt auf einem Werkzeuggrundkörper aufgebracht ist. Die Schnittstellen zu den Spindelnasen 325, 335 sind dann an dem Werkzeuggrundkörper ausgebildet. Das Werkzeug muss nicht notwendig eine Schleifschnecke sein. Es kann sich z.B. auch um eine Profilschleifscheibe, eine Kombination von zwei oder mehr Profilschleifscheiben oder eine Kombination aus einer oder mehreren Schleifschnecken und einer oder mehreren Profilschleifscheiben handeln.

In den vorstehend beschriebenen Ausführungsformen handelt es sich bei den Spindellagern 323 um Wälzlager. Stattdessen können auch andere Arten von Spindellagern zum Einsatz kommen, z.B. hydrostatische, hydrodynamische oder aerodynamische Lager, wie das im Stand der Technik an sich bekannt ist.

In den vorstehend beschriebenen Ausführungsformen kommen als Antriebsmotoren Direktantriebe zum Einsatz. Stattdessen ist es auch denkbar, Getriebemotoren einzusetzen.

Ein zweiter Antriebsmotor wie bei der vierten Ausführungsform kann auch bei der ersten bis dritten Ausführungsform vorgesehen werden.

Während als Wuchteinrichtungen vorzugsweise Ringwuchtsysteme zum Einsatz kommen, sind auch andere Arten von Wuchteinrichtungen denkbar, z.B. Hydro-Wuchtsysteme, wie sie aus dem Stand der Technik an sich bekannt sind. Bei solchen Wuchtsystemen erfolgt das Auswuchten durch das Einspritzen einer Flüssigkeit in Wuchtkammern, die in Umfangsrichtung verteilt angeordnet sind.

### BEZUGSZEICHENLISTE

- 100: Maschinenbett
- 200: Werkzeugträger
- 210: Z-Schlitten
- 220: Schwenkkörper
- 300: Werkzeugkopf
- 310: Basis
- 311: Linearführung
- 312: Kugelgewindetrieb
- 313: Kugelgewindespindel
- 320: erste Spindeleinheit
- 321: erstes Spindelgehäuse
- 322: erste Spindelwelle
- 323: erstes Spindellager
- 324: erster Antriebsmotor
- 325: erste Spindelnase
- 326: Führungsschuh
- 327: Klemmeinrichtung
- 328: Verstellantrieb
- 330: zweite Spindeleinheit
- 321: zweites Spindelgehäuse
- 332: zweite Spindelwelle
- 333: zweites Spindellager
- 334: zweiter Antriebsmotor
- 335: zweite Spindelnase
- 336: Führungsschuh
- 337: Klemmeinrichtung
- 338: Verstellantrieb
- 340: Werkzeug
- 341: Werkzeugaufnahme
- 342: Schleifkörper
- 350: erste Wuchteinheit
- 351: Schwingungssensor
- 352: Aktor
- 360: zweite Wuchteinheit
- 361: Schwingungssensor
- 362: Aktor
- 370: Zugstange
- 372: Spannmutter
- 373: Basiselement
- 374: Stützring
- 375: Axialdruckelement
- 376: Betätigungselement
- 380: gemeinsames Spindelgehäuse
- 386: Führungsschuh
- 390: Lagerspannvorrichtung
- 391: Lagerführung
- 392: Lageraufnahme
- 400: Drehturm
- 500: Werkstückspindel
- 510: Werkstück
- 600: Klemmeinrichtung
- 610: Dehnspannhülse
- 620: Stange
- 621: Montageflansch
- 622: Dämpfungsring
- 623: Druckring
- 630: Aktor
- 700: Maschinensteuerung
- 710: Steuerungsmodul
- 720: Bedientafel
- 730: Steuereinrichtung

- X, Y, Z: Linearachse
- A: Schwenkachse
- B: Werkzeugachse
- C1, C2: Werkstückachse
- C3: Schwenkachse des Turms

## Patentansprüche

1. Werkzeugkopf (300) für eine Werkzeugmaschine, insbesondere für eine Verzahnmaschine, aufweisend:
eine erste Spindeleinheit (320) mit mindestens einem ersten Spindellager (323) und einer ersten Spindelwelle (322), die in dem ersten Spindellager (323) um eine Werkzeugspindelachse (B) drehbar gelagert ist, wobei das erste Spindellager (323) dazu ausgebildet ist, sowohl Radial- als auch Axialkräfte aufzunehmen; und
eine zweite Spindeleinheit (330) mit mindestens einem zweiten Spindellager (333) und einer zweiten Spindelwelle (332), die in dem zweiten Spindellager (333) um die Werkzeugspindelachse (B) drehbar gelagert ist, wobei das zweite Spindellager (333) dazu ausgebildet ist, sowohl Radial- als auch Axialkräfte aufzunehmen,
wobei die erste Spindeleinheit (320) und die zweite Spindeleinheit (330) derart koaxial zueinander angeordnet sind, dass ein Werkzeug (340) axial zwischen der ersten Spindelwelle (322) und der zweiten Spindelwelle (332) aufnehmbar ist,
**dadurch gekennzeichnet,**
**dass** der Werkzeugkopf (300) eine gesteuerte Klemmeinrichtung (600), insbesondere ein Dehnspannelement (610), aufweist, um das erste Spindellager (323) und das zweite Spindellager (333) gesteuert miteinander zu verbinden,
**dass** dem Werkzeugkopf (300) eine Steuereinrichtung (730) zugeordnet ist, die dazu ausgebildet ist, die Klemmeinrichtung (600) während eines Bearbeitungsvorgangs zu aktivieren und in Bearbeitungspausen zu deaktivieren,
**dass** der Werkzeugkopf (300) mindestens einen Sensor (731) zur Überwachung eines Betriebszustands des Werkzeugkopfs (300) aufweist, insbesondere einen Temperatursensor, Vibrationssensor, Dehnungssensor, Kraftsensor oder Drucksensor, und
**dass** die Steuereinrichtung (730) dazu ausgebildet ist, den Sensor (731) auszulesen und die Klemmeinrichtung (600) unter Berücksichtigung einer vom Sensor (731) ermittelten Messgrösse zu deaktivieren.

2. Werkzeugkopf (300) nach einem der vorhergehenden Ansprüche, wobei die Klemmeinrichtung dazu ausgebildet ist, im aktivierten Zustand der Klemmeinrichtung (600) Schwingungen zwischen den ersten und zweiten Spindeleinheiten (320, 330) zu dämpfen.

3. Werkzeugkopf (300) nach Anspruch 1 oder 2, aufweisend:
ein gemeinsames Spindelgehäuse (380), in dem sowohl die erste Spindeleinheit (310) als auch die zweite Spindeleinheit (320) aufgenommen sind,
eine axial gegenüber dem gemeinsamen Spindelgehäuse (380) verschiebbare Lageraufnahme (391), in der das mindestens eine zweite Spindellager (333) gehalten ist,
wobei die Klemmeinrichtung (600) dazu ausgebildet ist, die Lageraufnahme (391) gesteuert zu fixieren, um das erste Spindellager (323) und das zweite Spindellager (333) miteinander zu verbinden.

4. Werkzeugkopf (300) nach Anspruch 1 oder 2,
wobei die erste Spindeleinheit (320) ein erstes Spindelgehäuse (321) aufweist, in dem das mindestens eine erste Spindellager (323) gehalten ist,
wobei die zweite Spindeleinheit (330) ein zweites Spindelgehäuse (331) aufweist, in dem das mindestens eine zweite Spindellager (333) gehalten ist und
wobei die Klemmeinrichtung (600) dazu ausgebildet ist, das erste Spindelgehäuse (321) und das zweite Spindelgehäuse (331) gesteuert miteinander zu koppeln, um das erste Spindellager (323) und das zweite Spindellager (333) miteinander zu verbinden.

5. Werkzeugkopf (300) für eine Werkzeugmaschine, insbesondere für eine Verzahnmaschine, aufweisend:
eine erste Spindeleinheit (320) mit mindestens einem ersten Spindellager (323) und einer ersten Spindelwelle (322), die in dem ersten Spindellager (323) um eine Werkzeugspindelachse (B) drehbar gelagert ist, wobei das mindestens eine erste Spindellager (323) dazu ausgebildet ist, sowohl Radial- als auch Axialkräfte aufzunehmen; und
eine zweite Spindeleinheit (330) mit einem zweiten Spindellager (333) und einer zweiten Spindelwelle (332), die in dem zweiten Spindellager (333) um die Werkzeugspindelachse (B) drehbar gelagert ist, wobei das mindestens eine zweite Spindellager (333) dazu ausgebildet ist, sowohl Radial- als auch Axialkräfte aufzunehmen,
wobei die erste Spindeleinheit (320) und die zweite Spindeleinheit (330) derart koaxial zueinander angeordnet sind, dass ein Werkzeug (340) axial zwischen der ersten Spindelwelle (322) und der zweiten Spindelwelle (332) aufnehmbar ist,
wobei der Werkzeugkopf (300) ein Axialkraftelement (390; 630) aufweist, das dazu ausgebildet ist, eine axiale Vorspannkraft zwischen dem ersten Spindellager (323) und dem zweiten Spindellager (333) zu erzeugen,
**dadurch gekennzeichnet, dass**
das Axialkraftelement (390; 630) einen Aktor, insbesondere einen pneumatischen oder hydraulischen Aktor, aufweist, um die axiale Vorspannkraft gesteuert zu verändern, insbesondere gezielt zu lösen,
dass dem Werkzeugkopf (300) eine Steuereinrichtung (730) zugeordnet ist, die dazu ausgebildet ist, den Aktor anzusteuern, um die axiale Vorspannkraft zu regeln und/oder gesteuert zu verändern, insbesondere, um das Axialkraftelement (390; 630) während eines Bearbeitungsvorgangs zu aktivieren und in Bearbeitungspausen zu deaktivieren,
dass der Werkzeugkopf (300) mindestens einen Sensor (731) zur Überwachung eines Betriebszustands des Werkzeugkopfs (300) aufweist, insbesondere einen Temperatursensor, Vibrationssensor, Dehnungssensor, Kraftsensor oder Drucksensor, und
dass die Steuereinrichtung (730) dazu ausgebildet ist, den Sensor (731) auszulesen und die axiale Vorspannkraft unter Berücksichtigung einer vom Sensor (731) ermittelten Messgrösse zu verändern.

6. Werkzeugkopf (300) nach Anspruch 5, aufweisend:
ein Spindelgehäuse (380), in dem sowohl die erste Spindeleinheit (310) als auch die zweite Spindeleinheit (320) aufgenommen sind,
eine axial gegenüber dem Spindelgehäuse (380) verschiebbare Lageraufnahme (391), in der das mindestens eine zweite Spindellager (333) gehalten ist,
wobei das Axialkraftelement (390) dazu ausgebildet ist, eine Axialkraft auf die Lageraufnahme (391) auszuüben, um die axiale Vorspannkraft zu erzeugen, wobei das Axialkraftelement (390) vorzugsweise ringförmig ist und ein Spannelement (372) zum axialen Verspannen des Werkzeugs (340) mit der ersten Spindelwelle (322) und der zweiten Spindelwelle (332) umgibt.

7. Werkzeugkopf (300) nach Anspruch 5,
wobei die erste Spindeleinheit (310) ein erstes Spindelgehäuse (311) aufweist,
wobei die zweite Spindeleinheit (310) ein zweites Spindelgehäuse (311) aufweist, und
wobei das Axialkraftelement (630) das erste Spindelgehäuse (311) und das zweite Spindelgehäuse (312) miteinander verbindet und dazu ausgebildet ist, eine Axialkraft zwischen dem ersten Spindelgehäuse (311) und dem zweiten Spindelgehäuse (312) auszuüben, um die axiale Vorspannkraft zu erzeugen.

8. Werkzeugkopf (300) nach einem der vorhergehenden Ansprüche, wobei das Werkzeug (340) derart axial zwischen der ersten Spindelwelle (322) und der zweiten Spindelwelle (332) verspannbar ist, dass zwischen der ersten Spindelwelle (322) und der zweiten Spindelwelle (332) eine axiale Druckkraft auf das Werkzeug (340) wirkt.

9. Werkzeugkopf (300) nach Anspruch 8,
wobei die zweite Spindelwelle (332) mindestens eine axiale Bohrung aufweist,
wobei der Werkzeugkopf (300) mindestens eine Zugstange (370) aufweist, die sich durch die axiale Bohrung der zweiten Spindelwelle (332) hindurch erstreckt, wobei die Zugstange (370) an einem Ende auf Zug mit der ersten Spindelwelle (322) verbindbar ist, und
wobei die Zugstange (370) an einem zweiten Ende derart mit der zweiten Spindelwelle (332) verbindbar ist, dass zwischen der ersten Spindelwelle (322) und der zweiten Spindelwelle (332) eine axiale Druckkraft auf das Werkzeug (340) erzeugbar ist,
wobei der Werkzeugkopf (300) vorzugsweise ein Spannelement (372) aufweist, das mit der Zugstange (370) an ihrem zweiten Ende verbindbar ist und dazu ausgebildet ist, die zweite Spindelwelle (332) axial in Richtung der ersten Spindelwelle (322) zu drücken,
wobei das Spannelement (372) weiter vorzugsweise aufweist:
ein Gehäuse, das starr mit der Zugstange (370) verbindbar ist;
ein Axialdruckelement, das gegenüber dem Gehäuse axial in Richtung der zweiten Spindelwelle (332) verschiebbar ist, um die zweite Spindelwelle (332) axial in Richtung der ersten Spindelwelle (322) zu drücken; und
mindestens ein Betätigungselement, wobei das Betätigungselement relativ zum Gehäuse bewegbar ist, um eine axiale Druckkraft auf das Axialdruckelement relativ zum Gehäuse zu erzeugen.

10. Werkzeugkopf (300) nach einem der vorhergehenden Ansprüche,
wobei an einem werkzeugseitigen Ende der ersten Spindelwelle (322) eine erste Spindelnase (325) derart ausgebildet ist, dass an der ersten Spindelnase (325) durch eine axiale Druckkraft eine kraftschlüssige und/oder formschlüssige Verbindung zum Werkzeug (340) herstellbar ist, insbesondere eine Konusverbindung, vorzugsweise eine Konusverbindung mit Plananlage, und
wobei an einem werkzeugseitigen Ende der zweiten Spindelwelle (332) eine zweite Spindelnase (335) derart ausgebildet ist, dass an der zweiten Spindelnase (335) durch eine axiale Druckkraft eine kraftschlüssige und/oder formschlüssige Verbindung zum Werkzeug (340) herstellbar ist, insbesondere eine Konusverbindung, vorzugsweise eine Konusverbindung mit Plananlage.

11. Werkzeugkopf (300) nach einem der vorhergehenden Ansprüche,
wobei die erste Spindeleinheit (320) einen ersten Antriebsmotor (324) aufweist, der dazu ausgebildet ist, die erste Spindelwelle (322) zu einer Drehung um die Werkzeugspindelachse (B) anzutreiben, und/oder
wobei die zweite Spindeleinheit (330) einen zweiten Antriebsmotor (334) aufweist, der dazu ausgebildet ist, die zweite Spindelwelle (332) zu einer Drehung um die Werkzeugspindelachse (B) anzutreiben.

12. Werkzeugkopf (300) nach einem der vorhergehenden Ansprüche, aufweisend:
eine erste Wuchteinrichtung (350), die der ersten Spindeleinheit (320) zugeordnet ist und eine zweite Wuchteinrichtung (360), die der zweiten Spindeleinheit (330) zugeordnet ist,
wobei die erste Wuchteinrichtung (350) die erste Spindelwelle (322) radial umgibt und axial zwischen einem werkzeugseitigen Spindellager (323) der ersten Spindeleinheit (320) und einem werkzeugseitigen Ende der ersten Spindelwelle (322) angeordnet ist, und/oder wobei die zweite Wuchteinrichtung (350) die zweite Spindelwelle (332) radial umgibt und axial zwischen einem werkzeugseitigen Spindellager (333) der zweiten Spindeleinheit (330) und einem werkzeugseitigen Ende der zweiten Spindelwelle (332) angeordnet ist, und
wobei die erste und/oder zweite Wuchteinrichtung (350, 360) vorzugsweise als Ringwuchtsystem ausgebildet ist.

13. Werkzeugkopf (300) nach einem der vorhergehenden Ansprüche, ausserdem aufweisend ein Werkzeug (340), insbesondere ein Schleifwerkzeug, bevorzugt ein Schleifwerkzeug zum Verzahnungsschleifen, das axial zwischen der ersten Spindelwelle (322) und der zweiten Spindelwelle (332) aufgenommen ist und insbesondere derart axial verspannt ist, dass zwischen der ersten Spindelwelle (322) und der zweiten Spindelwelle (332) eine axiale Druckkraft auf das Werkzeug (340) wirkt.

14. Werkzeugmaschine, aufweisend:
einen Werkzeugkopf (300) nach einem der vorhergehenden Ansprüche; und
mindestens eine Werkstückspindel (500), um ein Werkstück (510) zur Drehung um eine Werkstückachse (C1) anzutreiben,
wobei die Werkzeugmaschine vorzugsweise eine Verzahnmaschine ist, insbesondere eine Verzahnungsschleifmaschine.

15. Verfahren zum Betrieb eines Werkzeugkopfes (300) nach einem der Ansprüche 1 bis 13, aufweisend:
Verbinden des ersten Spindellagers (323) und das zweite Spindellagers (333) während eines Bearbeitungsvorgangs und Lösen der Verbindung in Bearbeitungspausen; und/oder
Erzeugen einer axialen Vorspannkraft zwischen dem ersten Spindellager (323) und dem zweiten Spindellager (333).

## Claims

1. A tool head (300) for a machine tool, in particular for a gear cutting machine, comprising:
a first spindle unit (320) with at least one first spindle bearing (323) and a first spindle shaft (322) which is mounted in the first spindle bearing (323) so as to be rotatable about a tool spindle axis (B), the first spindle bearing (323) being configured to absorb both radial and axial forces; and
a second spindle unit (330) with at least one second spindle bearing (333) and a second spindle shaft (332) which is mounted in the second spindle bearing (333) so as to be rotatable about the tool spindle axis (B), the second spindle bearing (333) being configured to absorb both radial and axial forces,
wherein the first spindle unit (320) and the second spindle unit (330) are arranged coaxially with respect to each other in such a way that a tool (340) is receivable axially between the first spindle shaft (322) and the second spindle shaft (332),
**characterized in that**
the tool head (300) comprises a controlled clamping device (600), in particular an expansion clamping element (610), for controllably connecting the first spindle bearing (323) and the second spindle bearing (333) to one another,
**in that** a control device (730) is associated with the tool head (300), the control device being configured to activate the clamping device (600) during a machining operation and to deactivate it during machining pauses,
**in that** tool head (300) comprises at least one sensor (731) for monitoring an operating state of the tool head (300), in particular a temperature sensor, vibration sensor, strain sensor, force sensor or pressure sensor, and
**in that** the control device (730) is configured to read out the sensor (731) and to deactivate the clamping device (600) taking into account a measurement parameter determined by the sensor (731).

2. The tool head (300) of any one of the preceding claims, wherein the clamping device is configured to dampen vibrations between the first and second spindle units (320, 330) when the clamping device (600) is in an activated state.

3. The tool head (300) of claim 1 or 2, comprising:
a common spindle housing (380) in which both the first spindle unit (310) and the second spindle unit (320) are accommodated,
a bearing receptacle (391) which is axially displaceable relative to the common spindle housing (380) and in which the at least one second spindle bearing (333) is held,
wherein the clamping device (600) is configured to controllably fix the bearing receptacle (391) to connect the first spindle bearing (323) and the second spindle bearing (333) to each other.

4. The tool head (300) of claim 1 or 2,
wherein the first spindle unit (320) comprises a first spindle housing (321) in which the at least one first spindle bearing (323) is held,
wherein the second spindle unit (330) comprises a second spindle housing (331) in which the at least one second spindle bearing (333) is held, and
wherein the clamping device (600) is configured to controllably couple the first spindle housing (321) and the second spindle housing (331) to each other to connect the first spindle bearing (323) and the second spindle bearing (333) to each other.

5. A tool head (300) for a machine tool, in particular for a gear cutting machine, comprising:
a first spindle unit (320) with at least one first spindle bearing (323) and a first spindle shaft (322) which is mounted in the first spindle bearing (323) so as to be rotatable about a tool spindle axis (B), the at least one first spindle bearing (323) being configured to absorb both radial and axial forces; and
a second spindle unit (330) with a second spindle bearing (333) and a second spindle shaft (332) which is mounted in the second spindle bearing (333) so as to be rotatable about the tool spindle axis (B), the at least one second spindle bearing (333) being configured to absorb both radial and axial forces,
wherein the first spindle unit (320) and the second spindle unit (330) are arranged coaxially with respect to each other in such a way that a tool (340) is receivable axially between the first spindle shaft (322) and the second spindle shaft (332),
wherein the tool head (300) comprises an axial force element (390; 630) configured to generate an axial preload force between the first spindle bearing (323) and the second spindle bearing (333),
**characterized in that**
the axial force element (390; 630) comprises an actuator, in particular a pneumatic or hydraulic actuator, in order to controllably change the axial preload force, in particular to deliberately release it,
**in that** the tool head (300) is associated with a control device (730) which is configured to actuate the actuator in order to regulate and/or controllably change the axial preload force in a controlled manner, in particular in order to activate the axial force element (390; 630) during a machining operation and to deactivate it during machining pauses,
**in that** the tool head (300) comprises at least one sensor (731) for monitoring an operating state of the tool head (300), in particular a temperature sensor, vibration sensor, strain sensor, force sensor or pressure sensor, and
**in that** the control device (730) is configured to read the sensor (731) and to change the axial preload force taking into account a measurement parameter determined by the sensor (731).

6. The tool head (300) of claim 5, comprising:
a spindle housing (380) in which both the first spindle unit (310) and the second spindle unit (320) are accommodated,
a bearing receptacle (391) which is axially displaceable relative to the spindle housing (380) and in which the at least one second spindle bearing (333) is held,
wherein the axial force element (390) is configured to exert an axial force on the bearing receptacle (391) to generate the axial preload force,
wherein the axial force element (390) is preferably annular and surrounds a clamping element (372) for axially clamping the tool (340) to the first spindle shaft (322) and the second spindle shaft (332).

7. The tool head (300) of claim 5,
wherein the first spindle unit (310) comprises a first spindle housing (311),
wherein the second spindle unit (310) comprises a second spindle housing (311), and
wherein the axial force element (630) connects the first spindle housing (311) and the second spindle housing (312) to each other and is configured to exert an axial force between the first spindle housing (311) and the second spindle housing (312) to generate the axial preload force.

8. The tool head (300) of any one of the preceding claims, wherein the tool (340) is axially clampable between the first spindle shaft (322) and the second spindle shaft (332) such that an axial compression force acts on the tool (340) between the first spindle shaft (322) and the second spindle shaft (332).

9. The tool head (300) of claim 8,
wherein the second spindle shaft (332) has at least one axial bore,
wherein the tool head (300) comprises at least one pull rod (370) extending through the axial bore of the second spindle shaft (332), the pull rod (370) being connectable at one end to the first spindle shaft (322) so as to be tensioned, and
wherein the pull rod (370) is connectable at a second end to the second spindle shaft (332) such that an axial compression force can be generated on the tool (340) between the first spindle shaft (322) and the second spindle shaft (332),
wherein the tool head (300) preferably comprises a clamping element (372) connectable to the pull rod (370) at its second end and configured to axially push the second spindle shaft (332) towards the first spindle shaft (322),
wherein the clamping element (372) preferably further comprises:
a housing which is rigidly connectable to the pull rod (370);
an axial push element axially displaceable relative to the housing in the direction of the second spindle shaft (332) to push the second spindle shaft (332) axially towards the first spindle shaft (322); and
at least one actuating member, the actuating member being movable relative to the housing to generate an axial compression force on the axial push member relative to the housing.

10. The tool head (300) of any one of the preceding claims,
wherein a first spindle nose (325) is formed at a tool-side end of the first spindle shaft (322) in such a way that a non-positive and/or positive connection to the tool (340) can be produced at the first spindle nose (325) by means of an axial compression force, in particular a conical connection, preferably a conical connection with face contact, and
wherein a second spindle nose (335) is formed at a tool-side end of the second spindle shaft (332) in such a way that a non-positive and/or positive connection to the tool (340) can be produced at the second spindle nose (335) by an axial compression force, in particular a conical connection, preferably a conical connection with face contact.

11. The tool head (300) of any one of the preceding claims,
wherein the first spindle unit (320) comprises a first drive motor (324) configured to drive the first spindle shaft (322) to rotate about the tool spindle axis (B), and/or
wherein the second spindle unit (330) comprises a second drive motor (334) configured to drive the second spindle shaft (332) to rotate about the tool spindle axis (B).

12. The tool head (300) of any one of the preceding claims, comprising:
a first balancing device (350) associated with the first spindle unit (320); and
a second balancing device (360) associated with the second spindle unit (330),
wherein the first balancing device (350) radially surrounds the first spindle shaft (322) and is arranged axially between a tool-side spindle bearing (323) of the first spindle unit (320) and a tool-side end of the first spindle shaft (322), and/or
wherein the second balancing device (350) radially surrounds the second spindle shaft (332) and is axially arranged between a tool-side spindle bearing (333) of the second spindle unit (330) and a tool-side end of the second spindle shaft (332), and
wherein the first and/or second balancing device (350, 360) is preferably configured as a ring balancing system.

13. The tool head (300) of any one of the preceding claims, further comprising a tool (340), in particular a grinding tool, preferably a grinding tool for gear grinding, which is axially received between the first spindle shaft (322) and the second spindle shaft (332) and is in particular axially clamped such that an axial compression force acts on the tool (340) between the first spindle shaft (322) and the second spindle shaft (332).

14. A machine tool, comprising:
a tool head (300) according to any one of the preceding claims; and
at least one workpiece spindle (500) for driving a workpiece (510) to rotate about a workpiece axis (C1),
wherein the machine tool is preferably a gear cutting machine, in particular a gear grinding machine.

15. A method of operating a tool head (300) according to any one of claims 1 to 13, comprising:
connecting the first spindle bearing (323) and the second spindle bearing (333) during a machining operation and releasing the connection during machining pauses; and/or
generating an axial preload force between the first spindle bearing (323) and the second spindle bearing (333).

## Revendications

1. Tête d'outil (300) pour une machine-outil, en particulier pour une machine à tailler les engrenages, présentant :
une première unité de broche (320) avec au moins un premier palier de broche (323) et un premier arbre de broche (322), qui est logé dans le premier palier de broche (323) de manière à pouvoir tourner autour d'un axe de broche d'outil (B), le premier palier de broche (323) étant conçu pour absorber aussi bien des forces radiales que des forces axiales ; et
une deuxième unité de broche (330) avec au moins un deuxième palier de broche (333) et un deuxième arbre de broche (332), qui est logé dans le deuxième palier de broche (333) de manière à pouvoir tourner autour de l'axe de broche d'outil (B), le deuxième palier de broche (333) étant conçu pour absorber aussi bien des forces radiales que des forces axiales,
la première unité de broche (320) et la deuxième unité de broche (330) étant disposées coaxialement l'une par rapport à l'autre de telle sorte qu'un outil (340) puisse être reçu axialement entre le premier arbre de broche (322) et le deuxième arbre de broche (332),
**caractérisé**
**en ce que** la tête d'outil (300) présente un dispositif de serrage commandé (600), en particulier un élément de serrage par extension (610), pour relier entre eux de manière commandée le premier palier de broche (323) et le deuxième palier de broche (333),
**en ce qu'**un dispositif de commande (730) est associé à la tête d'outil (300), lequel étant conçu pour activer le dispositif de serrage (600) pendant une opération d'usinage et pour le désactiver pendant les pauses d'usinage,
**en ce que** la tête d'outil (300) présente au moins un capteur (731) pour surveiller un état de fonctionnement de la tête d'outil (300), en particulier un capteur de température, un capteur de vibrations, un capteur de dilatation, un capteur de force ou un capteur de pression, et
**en ce que** le dispositif de commande (730) est conçu pour lire le capteur (731) et pour désactiver le dispositif de serrage (600) en tenant compte d'un mesurande déterminé par le capteur (731).

2. Tête d'outil (300) selon l'une quelconque des revendications précédentes, dans laquelle le dispositif de serrage est conçu pour amortir des vibrations entre les première et deuxième unités de broches (320, 330) lorsque le dispositif de serrage (600) est activé.

3. Tête d'outil (300) selon la revendication 1 ou 2, comprenant :
un boîtier de broche commun (380) dans lequel sont logées à la fois la première unité de broche (310) et la deuxième unité de broche (320),
un logement de palier (391) dans lequel est maintenu l'au moins un deuxième palier de broche (333), le logement de palier étant déplaçable axialement par rapport au boîtier de broche commun (380),
le dispositif de serrage (600) étant conçu pour fixer de manière commandée le logement de palier (391) afin de relier le premier palier de broche (323) et le deuxième palier de broche (333) l'un à l'autre.

4. Tête d'outil (300) selon la revendication 1 ou 2,
la première unité de broche (320) comprenant un premier boîtier de broche (321) dans lequel l'au moins un premier palier de broche (323) est maintenu,
la deuxième unité de broche (330) comprenant un deuxième boîtier de broche (331) dans lequel l'au moins un deuxième palier de broche (333) est maintenu et
le dispositif de serrage (600) étant conçu pour coupler de manière commandée le premier boîtier de broche (321) et le deuxième boîtier de broche (331) l'un à l'autre afin de relier le premier palier de broche (323) et le deuxième palier de broche (333) l'un à l'autre.

5. Tête d'outil (300) pour une machine-outil, en particulier pour une machine à tailler les engrenages, présentant :
une première unité de broche (320) avec au moins un premier palier de broche (323) et un premier arbre de broche (322), qui est logé dans le premier palier de broche (323) de manière à pouvoir tourner autour d'un axe de broche d'outil (B), l'au moins un premier palier de broche (323) étant conçu pour absorber aussi bien des forces radiales que des forces axiales ; et
une deuxième unité de broche (330) avec un deuxième palier de broche (333) et un deuxième arbre de broche (332), qui est logé dans le deuxième palier de broche (333) de manière à pouvoir tourner autour de l'axe de broche d'outil (B), l'au moins un deuxième palier de broche (333) étant conçu pour absorber aussi bien des forces radiales que des forces axiales,
la première unité de broche (320) et la deuxième unité de broche (330) étant disposées coaxialement l'une par rapport à l'autre de telle sorte qu'un outil (340) puisse être reçu axialement entre le premier arbre de broche (322) et le deuxième arbre de broche (332),
la tête d'outil (300) comprenant un élément de force axiale (390 ; 630) conçu pour générer une force de précontrainte axiale entre le premier palier de broche (323) et le deuxième palier de broche (333),
**caractérisé**
**en ce que** l'élément de force axiale (390 ; 630) présente un actionneur, en particulier un actionneur pneumatique ou hydraulique, afin de modifier de manière commandée la force de précontrainte axiale, en particulier de la relâcher de manière ciblée,
**en ce qu'**un dispositif de commande (730) est associé à la tête d'outil (300), lequel étant conçu pour commander l'actionneur afin de réguler et/ou de modifier de manière commandée la force de précontrainte axiale, en particulier pour activer l'élément de force axiale (390 ; 630) pendant une opération d'usinage et pour le désactiver pendant les pauses d'usinage,
**en ce que** la tête d'outil (300) présente au moins un capteur (731) pour surveiller un état de fonctionnement de la tête d'outil (300), en particulier un capteur de température, un capteur de vibrations, un capteur de dilatation, un capteur de force ou un capteur de pression, et
**en ce que** le dispositif de commande (730) est conçu pour lire le capteur (731) et pour modifier la force de précontrainte axiale en tenant compte d'un mesurande déterminé par le capteur (731).

6. Tête d'outil (300) selon la revendication 5, comprenant :
un boîtier de broche (380) dans lequel sont logées à la fois la première unité de broche (310) et la deuxième unité de broche (320),
un logement de palier (391) dans lequel est maintenu le au moins un deuxième palier de broche (333), le logement de palier étant déplaçable axialement par rapport au boîtier de broche (380),
l'élément de force axiale (390) étant conçu pour exercer une force axiale sur le logement de palier (391) afin de générer la force de précontrainte axiale, l'élément de force axiale (390) étant de préférence annulaire et entourant un élément de serrage (372) pour serrer axialement l'outil (340) avec le premier arbre de broche (322) et le deuxième arbre de broche (332).

7. Tête d'outil (300) selon la revendication 5,
la première unité de broche (310) comprenant un premier boîtier de broche (311),
la deuxième unité de broche (310) comprenant un deuxième boîtier de broche (311), et
l'élément de force axiale (630) reliant le premier boîtier de broche (311) et le deuxième boîtier de broche (312) et étant conçu pour exercer une force axiale entre le premier boîtier de broche (311) et le deuxième boîtier de broche (312) pour générer la force de précontrainte axiale.

8. Tête d'outil (300) selon l'une quelconque des revendications précédentes, dans laquelle l'outil (340) peut être serré axialement entre le premier arbre de broche (322) et le deuxième arbre de broche (332) de telle sorte qu'une force de pression axiale agisse sur l'outil (340) entre le premier arbre de broche (322) et le deuxième arbre de broche (332).

9. Tête d'outil (300) selon la revendication 8,
le deuxième arbre de broche (332) présentant au moins un alésage axial,
la tête d'outil (300) comprenant au moins une barre de traction (370) s'étendant à travers l'alésage axial du deuxième arbre de broche (332), la barre de traction (370) pouvant être reliée à une extrémité en traction au premier arbre de broche (322), et
la barre de traction (370) pouvant être reliée à une deuxième extrémité au deuxième arbre de broche (332) de telle sorte qu'une force de pression axiale puisse être générée sur l'outil (340) entre le premier arbre de broche (322) et le deuxième arbre de broche (332),
la tête d'outil (300) comprenant de préférence un élément de serrage (372) qui peut être connecté à la barre de traction (370) au niveau de sa deuxième extrémité et qui est conçu pour pousser le deuxième arbre de broche (332) axialement vers le premier arbre de broche (322),
l'élément de serrage (372) comprenant en outre de préférence :
un boîtier pouvant être relié de manière rigide à la barre de traction (370) ;
un élément de pression axiale pouvant être déplacé axialement par rapport au boîtier en direction du deuxième arbre de broche (332) afin de pousser le deuxième arbre de broche (332) axialement vers le premier arbre de broche (322) ; et
au moins un élément d'actionnement, l'élément d'actionnement étant mobile par rapport au boîtier afin de générer une force de pression axiale sur l'élément de pression axiale par rapport au boîtier.

10. Tête d'outil (300) selon l'une quelconque des revendications précédentes,
un premier nez de broche (325) étant réalisé à une extrémité côté outil du premier arbre de broche (322) de telle sorte qu'une liaison par adhérence et/ou par obstacle avec l'outil (340) puisse être réalisée sur le premier nez de broche (325) par une force de pression axiale, en particulier une liaison conique, de préférence une liaison conique avec appui plan, et
un deuxième nez de broche (335) étant réalisé à une extrémité côté outil du deuxième arbre de broche (332) de telle sorte qu'une liaison par adhérence et/ou par obstacle avec l'outil (340) puisse être réalisée sur le deuxième nez de broche (335) par une force de pression axiale, en particulier une liaison conique, de préférence une liaison conique avec appui plan.

11. Tête d'outil (300) selon l'une quelconque des revendications précédentes,
la première unité de broche (320) comprenant un premier moteur d'entraînement (324) qui est conçu pour entraîner le premier arbre de broche (322) de manière à ce que celui-ci effectue une rotation autour de l'axe de broche d'outil (B), et/ou
la deuxième unité de broche (330) comprenant un deuxième moteur d'entraînement (334) qui est conçu pour entraîner le deuxième arbre de broche (332) de manière à ce que celui-ci effectue une rotation autour de l'axe de broche d'outil (B).

12. Tête d'outil (300) selon l'une quelconque des revendications précédentes, comprenant :
un premier dispositif d'équilibrage (350) associé à la première unité de broche (320) et un deuxième dispositif d'équilibrage (360) associé à la deuxième unité de broche (330),
le premier dispositif d'équilibrage (350) entourant radialement le premier arbre de broche (322) et étant disposé axialement entre un palier de broche (323) côté outil de la première unité de broche (320) et une extrémité côté outil du premier arbre de broche (322), et/ou le deuxième dispositif d'équilibrage (350) entourant radialement le deuxième arbre de broche (332) et étant disposé axialement entre un palier de broche (333) côté outil de la deuxième unité de broche (330) et une extrémité côté outil du deuxième arbre de broche (332), et
le premier et/ou le deuxième dispositif d'équilibrage (350, 360) étant de préférence conçu comme un système d'équilibrage annulaire.

13. Tête d'outil (300) selon l'une quelconque des revendications précédentes, comprenant en outre un outil (340), en particulier un outil de rectification, de préférence un outil de rectification pour la rectification d'engrenages, qui est logé axialement entre le premier arbre de broche (322) et le deuxième arbre de broche (332) et qui est en particulier serré axialement de telle sorte qu'une force de pression axiale agisse sur l'outil (340) entre le premier arbre de broche (322) et le deuxième arbre de broche (332).

14. Machine-outil, comprenant
une tête d'outil (300) selon l'une quelconque des revendications précédentes ; et
au moins une broche porte-pièce (500) pour entraîner une pièce (510) de manière à ce que celle-ci effectue une rotation autour d'un axe de pièce (C1),
la machine-outil étant de préférence une machine à tailler les engrenages, en particulier une machine à rectifier les engrenages.

15. Procédé de fonctionnement d'une tête d'outil (300) selon l'une quelconque des revendications 1 à 13, comprenant :
relier le premier palier de broche (323) et le deuxième palier de broche (333) pendant une opération d'usinage et libérer la liaison pendant les pauses d'usinage ; et/ou
générer une force de précontrainte axiale entre le premier palier de broche (323) et le deuxième palier de broche (333).
